# EUROPEAN PATENT APPLICATION

(11) **EP 4 838 580 A1**
(43) Date of publication of application: **11.11.2026**
(21) Application number: 24916416.1
(22) Date of filing: 05.09.2024
(51) Int. Cl.: H01M 4/58, H01M 10/04

(54) **LITHIUM IRON PHOSPHATE PARTICLES AND PREPARATION METHOD THEREFOR, POSITIVE ELECTRODE SHEET, SECONDARY BATTERY AND ELECTRIC DEVICE**

(30) Priority: 08.01.2024 CN 202410027073
(71) Applicant: Contemporary Amperex Technology Co., Limited, Ningde, Fujian 352100 (CN); JIANGSHU GCL LITHIUM BATTERY TECHNOLOGY CO., LTD., Jiangsu 221132 (CN)
(72) Inventor: HUANG, Yang, Ningde, Fujian 352100 (CN); CHENG, Chong, Ningde, Fujian 352100 (CN); BIE, Changfeng, Ningde, Fujian 352100 (CN); HU, Cheng, Ningde, Fujian 352100 (CN); SHANG, Yibo, Ningde, Fujian 352100 (CN); LIN, Zilong, Ningde, Fujian 352100 (CN); HE, Siyuan, Ningde, Fujian 352100 (CN); NI, Huan, Ningde, Fujian 352100 (CN)
(74) Representative: Kraus & Lederer PartGmbB
(86) International application number: PCT/CN2024/117030
(87) International publication number: WO 2025/148364

(57) **Abstract**

Large-particle, low-specific-surface-area and high-dynamics lithium iron phosphate particles. The primary average particle size of the lithium iron phosphate particles is 500-3000 nm, and the BET specific surface area thereof is 3 m²/g to 8 m²/g. By means of calculation on the basis of the total weight of the lithium iron phosphate particles, the carbon content of the lithium iron phosphate particles is Cx weight%, where 0.8 ≤Cx≤2.0.

## Description

### CROSS-REFERENCE TO RELATED APPLICATIONS

The present application claims priority to Chinese Patent Application No. 202410027073.3, filed on January 8, 2024 and entitled "LITHIUM IRON PHOSPHATE PARTICLE AND PREPARATION METHOD THEREFOR, POSITIVE ELECTRODE PLATE, SECONDARY BATTERY AND ELECTRICAL DEVICE", which is incorporated herein by reference in its entirety.

### TECHNICAL FIELD

The present application relates to the technical field of secondary batteries, and in particular, to a lithium iron phosphate particle and a preparation method therefor, a positive electrode plate, a secondary battery, and an electrical device.

### BACKGROUND

As a positive electrode material for lithium-ion batteries, lithium iron phosphate has rapidly become a global research hotspot due to its abundant resources, low cost, environmental friendliness, and stable voltage derived from its two-phase reaction. The cation arrangement in lithium iron phosphate is different from that of layered ternary materials and spinel LiMn₂O₄. Fe²⁺ occupies the 4c sites of oxygen octahedra, and Li⁺ occupies the 4a sites of oxygen octahedra. The polyanionic structure is stable and has a high thermal decomposition temperature, conferring good thermal stability. However, the FeO₆ octahedra are separated by oxygen atoms from the tetrahedral structure and interrupted by the phosphate tetrahedra, preventing the formation of a continuous FeO₆ network. This leads to poor electronic conductivity of lithium iron phosphate.

The industry usually employs approaches such as doping, coating, and particle nanosizing to improve the conductivity of lithium iron phosphate. Under low-temperature and high-rate conditions, the problems of electronic and ionic conduction become more pronounced, making it necessary to fully nanonize the material. However, nanosized materials have high specific surface energy, which brings about a series of processing problems, such as gelation, rapid moisture absorption, difficulty in drying, and low solid content of coating slurries. How to increase the particle size and reduce the BET specific surface area, thereby lowering the specific surface energy of the material, while ensuring the kinetic performance, represents a highly significant engineering and technological advancement.

### SUMMARY

The present application has been made in view of the above-mentioned issues. It is an objective of the present application to provide a lithium iron phosphate particle and a preparation method therefor, a positive electrode plate, a secondary battery, and an electrical device, where the lithium iron phosphate particle has a large particle size and also has excellent kinetic performance when used as a positive electrode material.

A first aspect of the present application provides a lithium iron phosphate particle. The lithium iron phosphate particle has an average primary particle size of 500 nm to 3000 nm and a BET specific surface area of 3 m²/g to 8 m²/g. Calculated based on a total weight of the lithium iron phosphate particle, a carbon content of the lithium iron phosphate particle is Cx wt%, where 0.8 ≤ Cx ≤ 2.0.

In any of the embodiments, the lithium iron phosphate particle has an average primary particle size of 650 nm to 2500 nm; and/or
the lithium iron phosphate particle has a BET specific surface area of 4 m²/g to 7 m²/g; and/or
calculated based on the total weight of the lithium iron phosphate particle, a carbon content of the lithium iron phosphate particle is Cx wt%, where 1.0 ≤ Cx ≤ 1.6.

In any of the embodiments, a ratio z of the BET specific surface area to Cx satisfies 1.5 ≤ z ≤ 8.5. In any of the embodiments, a ratio z of the BET specific surface area to Cx satisfies 3 ≤ z ≤ 6.

By configuring the lithium iron phosphate particle of the embodiments of the present application to have an average primary particle size of 500 nm to 3000 nm, a BET specific surface area of 3 m²/g to 8 m²/g, and a carbon content of Cx wt% (0.8 ≤ Cx ≤ 2.0) calculated based on the total weight of the lithium iron phosphate particle, and further optionally by configuring the ratio z of the BET specific surface area to Cx to satisfy 1.5 ≤ z ≤ 8.5, the kinetic performance of the lithium iron phosphate particle having the average primary particle size within the above range can be improved. The particle maintains a suitable micron-sized dimension, thereby avoiding the problems of interfacial side reactions and processing difficulties caused by nanosizing of the particle, and preventing the reduction in kinetic performance due to an excessively large particle size. In addition, it facilitates the stirring of a slurry containing the lithium iron phosphate particle and increases the solid content of the slurry, thereby alleviating the processing problems of a battery cell and further increasing the volumetric energy density of a battery. Furthermore, it can avoid the problem that an excessively dense carbon coating affects the normal intercalation and deintercalation of lithium ions, thereby affecting the capacity performance of the battery cell.

Compared with the prior art, the lithium iron phosphate particle in the embodiments of the present application has a smaller specific surface area with the same carbon content. This means that the particle contains less free carbon, allowing the carbon contained in the lithium iron phosphate particle to be more uniform and dense, and each particle to be coated. Therefore, the surface conductivity of the particle is improved, and its kinetic performance as a positive electrode material is enhanced.

In any of the embodiments, the lithium iron phosphate has a molecular formula of LiₘFeₓP_{y}OⱼQ_{q}, where Q includes at least one of Al, Na, K, Mg, Cu, Mn, Cr, Zn, Pb, Ca, Co, Ni, Sr, Nb, V, Ti, B, Si, N, S, F, Cl, and Br, 0.95 ≤ m ≤ 1.15, 0.9 ≤ x ≤ 1, 0.95 ≤ y ≤ 1, 3.5 ≤ j ≤ 4, and 0 < q ≤ 0.1.

By providing the lithium iron phosphate of the embodiments of the present application with the above molecular formula and doping it with one or more of the above elements, high-loading bulk phase modification of the lithium iron phosphate particle is achieved. This helps to improve the bulk phase ion transport capability of the lithium iron phosphate particle and can effectively solve the problem of poor kinetic performance inherent in large particles. Furthermore, such doping enables the lithium iron phosphate particle to exhibit good kinetic performance when used as a positive electrode material. In the present application, the modification may be embodied as doping and/or coating.

In any of the embodiments, Q includes at least one of Ti, V, Mg, and Nb, and calculated based on the total weight of the lithium iron phosphate particle, a content of Ti, V, Mg, and/or Nb is 1000 ppm to 10000 ppm.

In any of the embodiments, Q includes Ti. In any of the embodiments, calculated based on the total weight of the lithium iron phosphate particle, the content of Ti, V, Mg, and/or Nb is 2500 ppm to 6000 ppm.

By doping the lithium iron phosphate of the embodiments of the present application with one or more of the above elements and controlling the content thereof within the above range, metal bulk phase modification of the lithium iron phosphate particle can be better achieved while improving the average primary particle size of the lithium iron phosphate particle. This further enhances the bulk phase ion transport capability of the lithium iron phosphate particle and better solves the problem of poor kinetic performance inherent in large particles.

In any of the embodiments, the lithium iron phosphate particle is a single-crystal particle and/or a polycrystalline particle. In any of the embodiments, based on a total number of the lithium iron phosphate particles, a proportion of the single-crystal particles is more than 90%.

In the lithium iron phosphate particle of the embodiments of the present application, the carbon may be present in a state of being mixed with the lithium iron phosphate particle, or in a state of being coated on the lithium iron phosphate particle. In some embodiments, the carbon in the lithium iron phosphate particle is present in a state of being coated on the lithium iron phosphate particle, thereby allowing the carbon to form a uniform and dense carbon coating layer on the surface of the lithium iron phosphate particle, thereby improving the surface conductivity of the particle.

In any of the embodiments, the lithium iron phosphate particle has a capacity ratio η ≥ 88%. The capacity ratio η is defined as follows: a battery including the lithium iron phosphate particle as a positive electrode material is charged and discharged twice at a constant current of 0.1C within a voltage range of 2.0 V to 3.75 V, and then is charged and discharged once at a constant current of 1C. In a charge-discharge test at a rate of 1C, a capacity value at a discharge voltage of 3.2 V is recorded as C1, a capacity value at a discharge voltage of 2.0 V is recorded as C2, and η = C1/C2, where the charging process includes constant-voltage charging at a constant voltage of 3.75 V with a constant-voltage cut-off current of 50 µA.

η represents the plateau retention performance of the material, and this value is strongly correlated with the discharge power performance of the battery. When this value is large, the battery can still maintain good power performance when discharged to a low SOC (state of charge), that is, the voltage drop of the battery is small when the battery is discharged with a large current at a low charge level. The lithium iron phosphate particle of the embodiments of the present application has a capacity ratio η ≥ 88%, indicating that the lithium iron phosphate particle of the present application can enable a secondary battery to exhibit good kinetic performance when used as a positive electrode material.

In any of the embodiments, the lithium iron phosphate particle satisfies at least one of a) to f):
a) Dv10 of the lithium iron phosphate particle is ≥ 0.2 µm;
b) Dv50 of the lithium iron phosphate particle is 0.5-5 µm;
c) Dv90 of the lithium iron phosphate particle is ≤ 10 µm;
d) Dv99 of the lithium iron phosphate particle is ≤ 12 µm;
e) a powder compaction density of the lithium iron phosphate under a pressure of 3 T is ≥ 2.25 g/cm³; and
f) a powder resistivity of the lithium iron phosphate is less than 60 Ω·cm.

In the present application, the above Dv10, Dv90, and Dv99 refer to the particle sizes corresponding to the cumulative volume particle size distribution percentages reaching 10%, 90%, and 99%, respectively. The testing method for the above parameters is the same as that for Dv50 described above, and the standards described in the examples of the present application may be used for the measurement.

It should be noted that Dv10 is a larger-the-better indicator, so an upper limit cannot be given, and Dv90 is a smaller-the-better indicator, so a lower limit cannot be given.

By allowing the lithium iron phosphate particle to satisfy at least one of a) to f), the lithium iron phosphate particle can better achieve the above technical effects.

In the present application, the testing method for powder resistivity is as follows: with reference to the national standard GB/T 33822-2017, a powder resistivity meter (Suzhou Lattice Electronics Co., Ltd., model ST2722) is used. 1 g of a sample (with an error within ±0.005 g) is weighed and added to a feeding cavity. A pressure of 8 MPa is applied, and a forward resistivity and a reverse resistivity of the sample are measured respectively. An average value of the two is taken as the powder resistivity of the sample.

In the present application, the powder compaction density is defined as follows: during compression under external force, as the powder moves and deforms, larger voids are filled, the contact area between particles increases, attractive forces between atoms are generated, and the mechanical engagement between particles is enhanced. The density of the compact formed, which has a certain density and strength, is the powder compaction density, expressed in g/cm³.

The testing method for compaction density is as follows: with reference to the national standard GB/T 24533-2009, a certain amount of powder is placed in a compacting mold, with the mold having a hollow middle and two metal discs, one above and one below. The powder is placed between the metal discs, and a metal cylinder is placed on top. The mold is placed in a compaction density instrument, and different pressures are applied. The thickness of the powder under different pressures can be read from the instrument. The compaction density is calculated by ρ = m/v.

The powder compaction density is calculated according to the following formula: ρc = m/V = m/(S × H), where ρc is the powder compaction density (g/cm³), m is the mass of the weighed material (g), S is the bottom area of the mold (1.327 cm²), and H is the height of the sample after compaction (cm).

A second aspect of the present application provides a method for preparing a lithium iron phosphate particle, including: providing raw materials including at least a lithium source, an iron source, a phosphorus source, a carbon source, a carbon film-forming agent, and a modifying agent, and performing at least two sintering steps, where a first sintering is performed at a temperature of 500°C to 760°C, and a carbon content of a material after the first sintering is 0.01 wt% to 0.79 wt%; and a second sintering is performed at a temperature of 700°C to 800°C, and a carbon content of a material after the second sintering is 0.8 wt% to 2.0 wt%.

In any of the embodiments, the first sintering is performed at a temperature of 550°C to 720°C, and the carbon content of the material after the first sintering is 0.05 wt% to 0.4 wt%; and the second sintering is performed at a temperature of 720°C to 780°C, and the carbon content of the material after the second sintering is 1.0 wt% to 1.6 wt%.

In the method for preparing a lithium iron phosphate particle according to the embodiments of the present application, two sintering steps are performed. By controlling the temperature of the first sintering within the above range and the carbon content of the intermediate after sintering within the above range, the lithium iron phosphate precursor obtained after the first sintering can have a large particle size, directly improving the powder compaction density and electrode plate compaction density of the final product. In addition, by adding a relatively low amount of carbon source in the first sintering, the blocking effect of the carbon layer on the growth process of the lithium iron phosphate particle is greatly reduced. This facilitates the crystallization and growth of the particle at a lower temperature, and also facilitates the solid-state diffusion reaction between the modifying agent and the lithium iron phosphate material, thereby achieving a high concentration of metal ion modification. Compared with the conventional method that uses a high temperature to achieve particle growth, the above preparation method of the present application can first synthesize large particles at a lower temperature. This can alleviate cracking of the carbon layer on the particle surface at high temperatures and enhance the compactness of the surface carbon. Meanwhile, during the first sintering, the carbon source can effectively reduce trivalent iron in the raw materials, improving product purity and stability. By controlling the temperature of the second sintering within the above range and the carbon content of the sintered material to be 0.8 wt% to 2.0 wt%, carbon can be coated on the surfaces of the lithium iron phosphate particles, forming a lithium iron phosphate material having a uniform and dense carbon coating layer that coats each particle, greatly improving the surface conductivity of the particles.

In any of the embodiments, the lithium iron phosphate particle contains at least one of Ti, V, Mg, and/or Nb, and calculated based on the total weight of the lithium iron phosphate particle, the content of the elements is 1000 ppm to 10000 ppm. In some embodiments, the lithium iron phosphate particle contains at least one of Ti, V, Mg, and/or Nb, and calculated based on the total weight of the lithium iron phosphate particle, the content of the elements is 2500 ppm to 6000 ppm.

By doping the lithium iron phosphate of the embodiments of the present application with one or more of the above elements and controlling the content thereof within the above range, metal bulk phase modification of the lithium iron phosphate particle can be better achieved while improving the average primary particle size of the lithium iron phosphate particle. This further enhances the bulk phase ion transport capability of the lithium iron phosphate particle and better solves the problem of poor kinetic performance inherent in large particles.

In any of the embodiments, in the method for preparing a lithium iron phosphate particle, a first pulverization is performed after the first sintering, and a second pulverization is performed after the second sintering, where a Dv50 of a product after the first pulverization is 300 nm to 1200 nm; and a Dv50 of a product after the second pulverization is 500 nm to 5000 nm.

In any of the embodiments, the Dv50 of the product after the first pulverization is 400 nm to 1100 nm; and the Dv50 of the product after the second pulverization is 300 nm to 2500 nm.

In the method for preparing a lithium iron phosphate particle according to the embodiments of the present application, pulverization is performed after the two sintering steps. By performing the first pulverization after the first sintering so that the Dv50 of the product is 300 nm to 1200 nm, the blocking effect of the carbon material and modifying elements on crystal growth can be avoided, and a micron-sized lithium iron phosphate precursor can be obtained. By performing the second pulverization after the second sintering so that the Dv50 of the product is 500 nm to 3000 nm, lithium iron phosphate particles having a desired particle size can be obtained, and a uniform and dense carbon coating layer that coats each particle can be formed, greatly improving the surface conductivity of the particles.

In any of the embodiments, the method for preparing a lithium iron phosphate particle includes: providing raw materials including at least a lithium source, an iron source, a phosphorus source, a carbon source, a carbon film-forming agent, and a modifying agent, where mixing ratios of the lithium source, the iron source, and the phosphorus source, in terms of atomic molar amounts of the elements, satisfy Fe:P = 0.96-0.985 and Li:Fe = (1.0-1.1):(0.95-1.1); and a weight ratio of the carbon source to the carbon film-forming agent satisfies carbon source:carbon film-forming agent = 9:1 to 2:8.

Using the raw materials containing the lithium source, iron source, phosphorus source, carbon source, modifying agent, and carbon film-forming agent in the above ratios, good modification can be achieved, and the resulting lithium iron phosphate particle precursor can be formed into relatively large particles. Therefore, the average primary particle size, carbon content, BET specific surface area, and z value of the lithium iron phosphate particle according to the first aspect of the present application can be well achieved. Specifically, as described above, by configuring the lithium iron phosphate particle of the embodiments of the present application to have an average primary particle size of 500 nm to 3000 nm, the particle can maintain a suitable micron-sized dimension, thereby avoiding the problems of interfacial side reactions and processing difficulties caused by nanosizing of the particle (in the art, there are difficulties in processing nanosized particles), and preventing the reduction in kinetic performance due to an excessively large particle size. Furthermore, by configuring the lithium iron phosphate particle of the embodiments of the present application to have a BET specific surface area of 3 m²/g to 8 m²/g, the stirring of a slurry containing the lithium iron phosphate particle and the increase of the solid content of the slurry can be facilitated, thereby alleviating the processing problems of a battery cell and further increasing the volumetric energy density of a battery. Further optionally, by configuring the ratio z of the BET specific surface area to Cx of the lithium iron phosphate particle of the embodiments of the present application to satisfy 1.5 ≤ z ≤ 8.5, the carbon contained in the lithium iron phosphate particle can be made more uniform and dense, and each particle can be coated, thereby improving the surface conductivity of the particle.

In any of the embodiments, in the method for preparing a lithium iron phosphate particle, the lithium source is a lithium compound, including one or more of lithium dihydrogen phosphate, lithium oxalate, lithium carbonate, lithium oxide, lithium hydroxide, and lithium acetate; the iron source is an iron compound, including at least one of iron hydroxide, ferrous chloride, diiron trioxide, iron phosphate, iron pyrophosphate, ferrous oxalate, iron powder, iron nitrate, triiron tetroxide, and iron oxyhydroxide; the phosphorus source is a phosphorus compound, including one or more of phosphoric acid, ammonium dihydrogen phosphate, and diammonium hydrogen phosphate; the modifying agent includes at least one of titanium dioxide, vanadium pentoxide, tetrabutyl titanate, ammonium metavanadate, niobium ethoxide, niobium oxalate, niobium pentoxide, magnesium hydroxide, and magnesium nitrate; the carbon source includes at least one of citric acid, glucose, sucrose, starch, fructose, and lactose; and the carbon film-forming agent includes one or a combination of two or more of polyethylene glycol, polyaniline, polyacrylonitrile, polyvinylpyrrolidone, and polyvinyl alcohol.

In any of the embodiments, in the method for preparing a lithium iron phosphate particle, the lithium source is a lithium compound, including lithium carbonate; the iron source is an iron compound, including diiron trioxide; the phosphorus source is a phosphorus compound, including phosphoric acid; the modifying agent includes titanium dioxide; the carbon source includes glucose; and the carbon film-forming agent includes polyaniline.

By selecting the above substances as the lithium source, iron source, phosphorus source, modifying agent, carbon source, and carbon film-forming agent used in the method for preparing a lithium iron phosphate particle of the embodiments of the present application, the average primary particle size, carbon content, BET specific surface area, and z value of the lithium iron phosphate particle according to the first aspect of the present application can be well achieved. Therefore, the large particle size of the lithium iron phosphate particle of the embodiments of the present application is better achieved, while excellent kinetic performance is achieved when it is used as a positive electrode material.

In any of the embodiments, a heating rate in each of the first sintering and the second sintering is independently 2°C/min to 20°C/min, a constant-temperature holding time of the first sintering is 1 h to 6 h, and a constant-temperature holding time of the second sintering is 2 h to 12 h.

By independently controlling the heating rates and constant-temperature holding times in the first sintering and the second sintering within the above ranges, it is possible to prevent excessive side reactions during the sintering process due to excessively rapid heating, which would otherwise affect the average primary particle size, carbon content, BET specific surface area, and z value of the resulting lithium iron phosphate particle. Therefore, the large particle size of the lithium iron phosphate particle of the embodiments of the present application is better achieved, while excellent kinetic performance is achieved when it is used as a positive electrode material.

In any of the embodiments, in the second sintering, a carbon coating is performed on the product after the first sintering, and based on a total weight of the product after the first sintering, an amount of the carbon coating is 0.01 wt% to 1.99 wt%. In any of the embodiments, based on the total weight of the product after the first sintering, the amount of the carbon coating is 0.2 wt% to 1.6 wt%.

By performing the carbon coating on the product after the first sintering in the above content range after the first sintering and before the second sintering, a uniform and dense carbon coating layer that coats each particle can be formed on the surfaces of the lithium iron phosphate particles during the second sintering.

In any of the embodiments, the carbon coating is performed by vapor deposition during the sintering process, or by carbonizing a carbon source at a high temperature for carbon coating.

In the method for preparing a lithium iron phosphate particle according to the embodiments of the present application, the carbon coating method is not particularly limited. Using a vapor deposition method for carbon coating on the lithium iron phosphate particles can form a uniform and dense carbon coating layer that coats each particle on the surfaces of the lithium iron phosphate particles.

In any of the embodiments, the pulverization includes one or more of grinding, sand milling, mechanical crushing, and jet milling.

In the method for preparing a lithium iron phosphate particle according to the embodiments of the present application, the pulverization method is not particularly limited. By the above specific pulverization methods, the desired average primary particle size can be advantageously obtained.

A third aspect of the present application provides a positive electrode plate, which includes the lithium iron phosphate particle according to the first aspect of the present application as a positive electrode material.

A fourth aspect of the present application provides a secondary battery, which includes the positive electrode plate according to the third aspect of the present application.

A fifth aspect of the present application provides an electrical device, which includes the secondary battery according to the fourth aspect of the present application.

### BRIEF DESCRIPTION OF THE DRAWINGS

FIG. 1 shows SEM and TEM images of a lithium iron phosphate particle according to an embodiment of the present application, where FIG. 1a corresponds to an image of the lithium iron phosphate particle according to an embodiment of the present application observed under a scanning electron microscope (SEM); and FIG. 1b and FIG. 1c correspond to images of the lithium iron phosphate particle according to an embodiment of the present application observed under a transmission electron microscope (TEM);
FIG. 2 shows SEM images of a lithium iron phosphate particle according to an embodiment of the present application and a conventional lithium iron phosphate particle, where FIG. 2a is an SEM image of Example 10; and FIG. 2b is an SEM image of a conventional lithium iron phosphate particle;
FIG. 3 is a schematic diagram exemplarily showing a particle size of a primary particle of the present application;
FIG. 4 shows a capacity performance graph of a lithium iron phosphate particle according to an embodiment of the present application at rates of 0.1C and 1C;
FIG. 5 is a schematic diagram of a secondary battery according to an embodiment of the present application;
FIG. 6 is an exploded view of the secondary battery according to an embodiment of the present application shown in FIG. 5;
FIG. 7 is a schematic diagram of a battery module according to an embodiment of the present application;
FIG. 8 is a schematic diagram of a battery pack according to an embodiment of the present application;
FIG. 9 is an exploded view of the battery pack according to an embodiment of the present application shown in FIG. 8; and
FIG. 10 is a schematic diagram of an electrical device using a secondary battery according to an embodiment of the present application as a power source.

Description of reference numerals:
1-battery pack; 2-upper box; 3-lower box; 4-battery module; 5-secondary battery; 51-case; 52-electrode assembly; and 53-cover plate.

### DETAILED DESCRIPTION

Hereinafter, embodiments of the lithium iron phosphate particle and a preparation method therefor, the positive electrode plate, the secondary battery, and the electrical device of the present application will be described in detail. However, there may be cases where unnecessary detailed descriptions are omitted. For example, there may be cases where detailed descriptions of well-known technologies and repeated descriptions of substantially identical structure are omitted, for the purpose of preventing the following descriptions from becoming unnecessarily lengthy, and facilitating understanding by those skilled in the art. In addition, the drawings and subsequent descriptions are provided for those skilled in the art to fully understand the present application, and are not intended to limit the subject matters recited in the claims.

Any "range" disclosed in the present application is defined by a lower limit and an upper limit. A given range is defined by selecting a lower limit and an upper limit. The selected lower limit and upper limit define boundaries of the particular range. The range defined in this way may be inclusive or exclusive of endpoints, and may be combined in any way, that is, any lower limit may be combined with any upper limit to form a new range. For example, if ranges 60 to 120 and 80 to 110 are listed for a particular parameter, it is to be understood that ranges of 60 to 110 and 80 to 120 are also contemplated. Additionally, if the minimum range values 1 and 2 and the maximum range values 3, 4 and 5 are listed, the following ranges are all contemplated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where a and b are both real numbers. For example, the numerical range "0 to 5" means that all real numbers between 0 and 5 are listed herein, and "0 to 5" is merely an abbreviated representation of the combination of these numbers. In addition, when a certain parameter is expressed as an integer ≥2, it is equivalent to disclosing that the parameter is, for example, an integer such as 2, 3, 4, 5, 6, 7, 8, 9, 10, 11, 12, or the like.

Unless otherwise specified, all the embodiments and alternative embodiments of the present application may be combined with each other to form new technical solutions.

Unless otherwise specified, all technical features and alternative technical features of the present application may be combined with each other to form new technical solutions.

Unless otherwise specified, all the steps in the present application can be performed in sequence or in any order, preferably in sequence. For example, "the method including steps (a) and (b)" represents that the method may include steps (a) and (b) performed sequentially, or may include steps (b) and (a) performed sequentially. For example, "the method may further include step (c)" represents that step (c) may be added to the method in any order. For example, the method may include steps (a), (b) and (c), or steps (a), (c) and (b), or steps (c), (a) and (b), or the like.

Unless otherwise specifically stated, "comprising" and "including" mentioned in the present application represent an open-ended or closed-ended meaning. For example, the terms "comprise" and "include" may indicate that other components not listed may further be comprised or included, or only listed components may be comprised or included.

If not specifically stated, in the present application, the term "or" is inclusive. For example, the phrase "A or B" represents "A, B, or both A and B". More specifically, any one of the following conditions satisfies the condition "A or B": A is true (or present) and B is false (or not present); A is false (or not present) and B is true (or present); or both A and B are true (or present).

Lithium iron phosphate, as a positive electrode material for secondary batteries, has the problem of poor conductivity. In response, the industry usually employs approaches such as doping, coating, and particle nanosizing to improve the conductivity of lithium iron phosphate.

However, the carbon coating and nanosizing approaches currently commonly used in the industry, while reducing the average primary particle size, introduce a loose carbon layer. This significantly increases the specific surface area of the material, causing a series of processing and manufacturing problems during the processing and use of the material, increasing production costs, and reducing the production yield. Examples include slurry gelation, cracking of electrode plate coating, powder absorbing water upon exposure to air, powder falling off from the coated area of the electrode plate during slitting, and small particles detaching during cold pressing. This series of processing problems may all affect the life of the battery.

Therefore, preparing a large-particle lithium iron phosphate positive electrode material while improving the kinetic performance of the material is of great significance for industrialization. This will be described in detail below.

### [Lithium Iron Phosphate Particle]

In an embodiment of the present application, the lithium iron phosphate particle has an average primary particle size of 500 nm to 3000 nm. In some embodiments, the lithium iron phosphate particle has an average primary particle size of 650 nm to 2500 nm.

In some embodiments, the lithium iron phosphate particle has a BET specific surface area of 3 m²/g to 8 m²/g. In some embodiments, the lithium iron phosphate particle has a BET specific surface area of 4 m²/g to 7 m²/g.

In some embodiments, calculated based on a total weight of the lithium iron phosphate particle, a carbon content of the lithium iron phosphate particle is Cx wt%, where 0.8 ≤ Cx ≤ 2.0. In some embodiments, calculated based on the total weight of the lithium iron phosphate particle, the carbon content of the lithium iron phosphate particle is Cx wt%, where 1.0 ≤ Cx ≤ 1.6.

In some embodiments, the lithium iron phosphate particle has an average primary particle size of 500 nm, 600 nm, 650 nm, 700 nm, 790 nm, 800 nm, 870 nm, 900 nm, 920 nm, 1000 nm, 1100 nm, 1200 nm, 1250 nm, 1300 nm, 1400 nm, 1500 nm, 1600 nm, 1700 nm, 1800 nm, 1900 nm, 2000 nm, 2100 nm, 2200 nm, 2300 nm, 2400 nm, 2500 nm, 2600 nm, 2700 nm, 2800 nm, 2900 nm, or 3000 nm, or a value within a range between any two of the above values.

In some embodiments, the lithium iron phosphate particle has a BET specific surface area of 3 m²/g, 4 m²/g, 5 m²/g, 6 m²/g, 7 m²/g, 7.2 m²/g, 7.8 m²/g, or 8 m²/g, or a value within a range between any two of the above values.

In some embodiments, the lithium iron phosphate particle has a carbon content of 0.8 wt%, 0.9 wt%, 0.94 wt%, 1.0 wt%, 1.1 wt%, 1.2 wt%, 1.3 wt%, 1.4 wt%, 1.5 wt%, 1.6 wt%, 1.7 wt%, 1.8 wt%, 1.9 wt%, or 2.0 wt%, or a value within a range between any two of the above values.

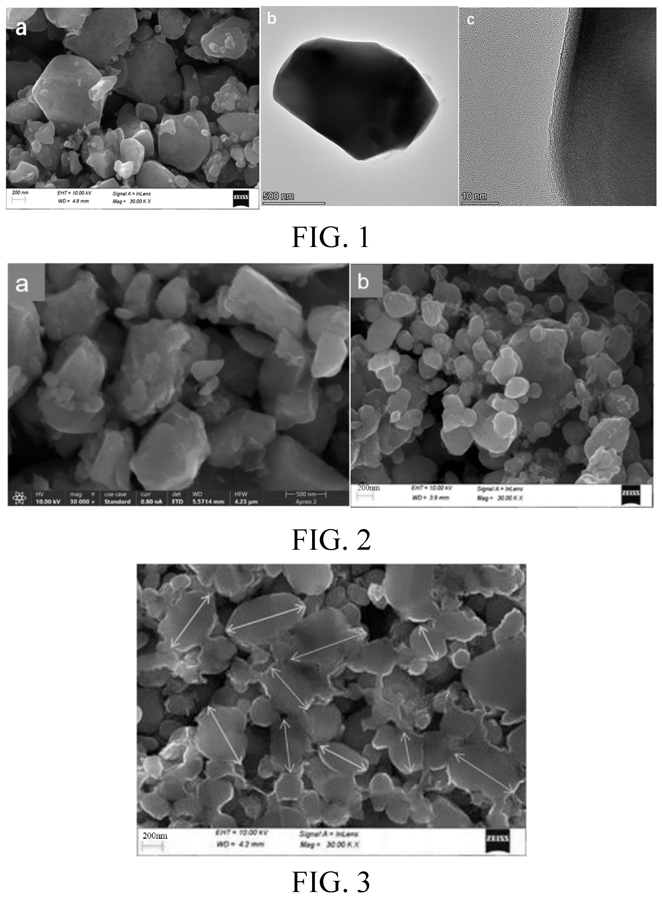

Herein, the term "average primary particle size" refers to a particle size value obtained by statistically analyzing particle sizes of particles using a long-axis statistical method under a scanning electron microscope field of view. During the particle size statistical process, particles having an average primary particle size of less than or equal to 80 nm are not included in the statistical range. The average primary particle size of the present application is shown in FIG. 3. The average primary particle size refers to an average particle size of primary particles. Herein, "primary particles" refer to particles that have no obvious agglomeration interface in a scanning electron microscope image of the particles, but may have micropores and point or line defects, as distinguished from powder particles of the smallest unit that have no structures such as agglomeration or flocculation. The methods for measuring the average primary particle size, carbon content, and BET specific surface area may be performed using the measurement methods described in the examples.

In the embodiments of the present application, by configuring the lithium iron phosphate particle to have an average primary particle size of 500 nm to 3000 nm, a BET specific surface area of 3 m²/g to 8 m²/g, and a carbon content of Cx wt% (0.8 ≤ Cx ≤ 2.0) calculated based on the total weight of the lithium iron phosphate particle, the kinetic performance of the lithium iron phosphate particle having the average primary particle size within the above range can be improved. The particle maintains a suitable micron-sized dimension, thereby avoiding the problems of interfacial side reactions and processing difficulties caused by nanosizing of the particle, and preventing the reduction in kinetic performance due to an excessively large particle size. In addition, it facilitates the stirring of a slurry containing the lithium iron phosphate particle and increases the solid content of the slurry, thereby alleviating the processing problems of a battery cell and further increasing the volumetric energy density of a battery. Furthermore, it can prevent the problem that an excessively dense carbon coating affects the normal intercalation and deintercalation of lithium ions, thereby affecting the capacity performance of the battery cell.

Compared with the prior art, the lithium iron phosphate particle in the embodiments of the present application has a smaller specific surface area with the same carbon content. This means that the particle contains less free carbon, allowing the carbon contained in the lithium iron phosphate particle to be more uniform and dense, and each particle to be coated. Therefore, the surface conductivity of the particle is improved, and its kinetic performance as a positive electrode material is enhanced.

In some embodiments, the ratio z of the BET specific surface area to Cx satisfies 1.5 ≤ z ≤ 8.5. In some embodiments, the ratio z of the BET specific surface area to Cx satisfies 3 ≤ z ≤ 6.

In some embodiments, the ratio z of the BET specific surface area to Cx is 1.5, 2.0, 2.5, 3.0, 3.9, 3.5, 3.75, 4.0, 4.17, 4.5, 5.0, 5.5, 5.71, 5.83, 6.0, 6.5, 7.0, 7.5, 8.0, or 8.5, or a value within a range between any two of the above values.

By further limiting the ratio z to satisfy the above range, it can be directly reflected that the lithium iron phosphate particle in the embodiments of the present application contains less free carbon, and the carbon coating is more uniform and dense, thereby further improving its conductivity and kinetic performance as a positive electrode material.

In some embodiments, the lithium iron phosphate has a molecular formula of LiₘFeₓP_{y}OⱼQ_{q}, where Q includes at least one of Al, Na, K, Mg, Cu, Mn, Cr, Zn, Pb, Ca, Co, Ni, Sr, Nb, V, Ti, B, Si, N, S, F, Cl, and Br, 0.95 ≤ m ≤ 1.15, 0.9 ≤ x ≤ 1, 0.95 ≤ y ≤ 1, 3.5 ≤ j ≤ 4, and 0 < q ≤ 0.1.

By providing the lithium iron phosphate of the embodiments of the present application with the above molecular formula and doping it with one or more of the above elements, high-loading bulk phase modification of the lithium iron phosphate particle is achieved. This helps to improve the bulk phase ion transport capability of the lithium iron phosphate particle and can effectively solve the problem of poor kinetic performance inherent in large particles. Furthermore, such doping enables the lithium iron phosphate particle to exhibit good kinetic performance when used as a positive electrode material. In the present application, the modification may be embodied as doping and/or coating.

In some embodiments, Q includes at least one of Ti, V, Mg, and Nb. In some embodiments, Q is Ti.

In some embodiments, calculated based on the total weight of the lithium iron phosphate particle, the content of Ti, V, Mg, and/or Nb is 1000 ppm to 10000 ppm. In some embodiments, calculated based on the total weight of the lithium iron phosphate particle, the content of Ti, V, Mg, and/or Nb is 2500 ppm to 6000 ppm, for example, 2500 ppm, 2600 ppm, 2700 ppm, 2800 ppm, 2900 ppm, 3000 ppm, 3100 ppm, 3200 ppm, 3300 ppm, 3400 ppm, 3500 ppm, 3600 ppm, 3700 ppm, 3800 ppm, 3900 ppm, 4000 ppm, 4100 ppm, 4200 ppm, 4300 ppm, 4400 ppm, 4500 ppm, 4600 ppm, 4700 ppm, 4800 ppm, 4900 ppm, 5000 ppm, 5100 ppm, 5200 ppm, 5300 ppm, 5400 ppm, 5500 ppm, 5600 ppm, 5700 ppm, 5800 ppm, 5900 ppm, or 6000 ppm, or a value within a range between any two of the above values.

In some embodiments, the lithium iron phosphate has a molecular formula of LiₘAₐFeₓD_{d}P_{y}EₑO_{z}G_{g}, where A includes at least one element selected from Al, Na, K, or Mg; D includes at least one element selected from Cu, Mn, Cr, Zn, Pb, Ca, Co, Ni, Sr, Nb, Ti, or V; E includes at least one element selected from B, S, Si, or N; G includes at least one element selected from S, F, Cl, or Br; m is selected from the range of 0.95 to 1.15; a is selected from the range of 0 to 0.1; x is selected from the range of 0.95 to 1; d is selected from the range of 0 to 0.1; y is selected from the range of 0.95 to 1; e is selected from the range of 0 to 0.1; z is selected from the range of 3.5 to 4; and g is selected from the range of 0 to 0.1.

By doping the lithium iron phosphate of the embodiments of the present application with one or more of the above elements and controlling the content thereof within the above range, metal bulk phase modification of the lithium iron phosphate particle can be better achieved while improving the average primary particle size of the lithium iron phosphate particle. This further enhances the bulk phase ion transport capability of the lithium iron phosphate particle and better solves the problem of poor kinetic performance inherent in large particles.

In some embodiments, the lithium iron phosphate particle is a single-crystal particle and/or a polycrystalline particle. In some embodiments, based on a total number of the lithium iron phosphate particles, a proportion of the single-crystal particles is more than 90%. A single crystal refers to a crystal having a complete structure grown from a single crystal nucleus, and there is no grain boundary within the single crystal. A polycrystal is a crystal formed by a large number of small single-crystal particles randomly oriented and bonded together, and there are grain boundaries within the polycrystal. Different from a perfect single crystal, the large single crystal referred to herein may have minor defects, such as micropores inside, a small number of point and plane defects, or a small amount of particle adhesion on the surface of a particle. However, the single crystal referred to herein is an integrated whole in the field of view of a TEM image.

In the embodiments of the present application, based on the total number of the lithium iron phosphate particles, the proportion of single-crystal particles is controlled within the above range. Compared with polycrystals and secondary agglomerates, a higher proportion of single-crystal particles results in less blocking of lithium ions by grain boundaries, a faster lithium ion transport rate, and better kinetic performance.

In the lithium iron phosphate particle of the embodiments of the present application, the carbon may be present in a state of being mixed with the lithium iron phosphate particle, or in a state of being coated on the lithium iron phosphate particle. Optionally, the carbon in the lithium iron phosphate particle is present in a state of being coated on the lithium iron phosphate particle, thereby allowing the carbon to form a uniform and dense carbon coating layer on the surface of the lithium iron phosphate particle, thereby improving the surface conductivity of the particle.

In some embodiments, the lithium iron phosphate particle has a capacity ratio η ≥ 88%. The capacity ratio η is defined as follows: a battery including the lithium iron phosphate particle as a positive electrode material is charged and discharged twice at a constant current of 0.1C within a voltage range of 2.0 V to 3.75 V, and then is charged and discharged once at a constant current of 1C. In a charge-discharge test at a rate of 1C, a capacity value at a discharge voltage of 3.2 V is recorded as C1, a capacity value at a discharge voltage of 2.0 V is recorded as C2, and η = C1/C2, where the charging process includes constant-voltage charging at a constant voltage of 3.75 V with a constant-voltage cut-off current of 50 µA.

The η value can characterize the kinetic performance of the lithium iron phosphate particle, and can be adjusted by adjusting the average primary particle size of the particle, the carbon content, the ratio of the carbon source to the film-forming agent, the modifying agent, and the content thereof. η represents the plateau retention performance of the material, and this value is strongly correlated with the discharge power performance of the battery. When this value is large, the battery can still maintain good power performance when discharged to a low SOC (state of charge), that is, the voltage drop of the battery is small when the battery is discharged with a large current at a low charge level. The lithium iron phosphate particle of the embodiments of the present application has a capacity ratio η ≥ 88%, indicating that the lithium iron phosphate particle of the present application can enable a secondary battery to exhibit good kinetic performance when used as a positive electrode material.

In some embodiments, the lithium iron phosphate particle satisfies at least one of a) to f):
a) Dv10 of the lithium iron phosphate particle is ≥ 0.2 µm;
b) Dv50 of the lithium iron phosphate particle is 0.5 µm to 5 µm;
c) Dv90 of the lithium iron phosphate particle is ≤ 10 µm;
d) Dv99 of the lithium iron phosphate particle is ≤ 12 µm;
e) a powder compaction density of the lithium iron phosphate under a pressure of 3 T is ≥ 2.25 g/cm³; and
f) a powder resistivity of the lithium iron phosphate is less than 60 Ω·cm.

In the present application, the above Dv10, Dv90, and Dv99 refer to the particle sizes corresponding to the cumulative volume particle size distribution percentages reaching 10%, 90%, and 99%, respectively. The testing method for the above parameters is the same as that for Dv50 described above, and the standards described in the examples of the present application may be used for the measurement.

It should be noted that the Dv10 is a larger-the-better indicator, so an upper limit cannot be given, and the Dv90 is a smaller-the-better indicator, so a lower limit cannot be given.

By allowing the lithium iron phosphate particle to satisfy at least one of a) to f), the lithium iron phosphate particle can better achieve the above technical effects.

In the present application, the testing methods for Dv10, Dv90, and Dv99 are the same as that for Dv50 described above, and the standards described in the examples of the present application may be used for the measurement.

In the present application, the testing method for powder resistivity is as follows: with reference to the national standard GB/T 33822-2017, a powder resistivity meter (Suzhou Lattice Electronics Co., Ltd., model ST2722) is used. 1 gram (g) of a sample (with an error within ±0.005 g) is weighed and added to a feeding cavity. A pressure of 8 megapascals (MPa) is applied, and a forward resistivity and a reverse resistivity of the sample are measured respectively. An average value of the two is taken as the powder resistivity of the sample.

In the present application, the powder compaction density is defined as follows: during compression under external force, as the powder moves and deforms, larger voids are filled, the contact area between particles increases, attractive forces between atoms are generated, and the mechanical engagement between particles is enhanced. The density of the compact formed, which has a certain density and strength, is the powder compaction density, expressed in g/cm³.

In the present application, the testing method for compaction density is as follows: with reference to the national standard GB/T 24533-2009, a certain amount of powder is placed in a dedicated compacting mold (with a known mold diameter), with the mold having a hollow middle and two metal discs, one above and one below. The powder is placed between the metal discs, and a metal cylinder is placed on top. The mold is placed in a compaction density instrument, and different pressures are applied. The thickness of the powder under different pressures can be read from the instrument. The compaction density is calculated by ρ = m/v.

The powder compaction density is calculated according to the following formula: ρc = m/V = m/(S*H), where ρc is the powder compaction density (g/cm³), m is the mass of the weighed material (g), S is the bottom area of the mold (1.327 cm²), and H is the height of the sample after compaction (cm).

### [Method for Preparing Lithium Iron Phosphate Particle]

A method for preparing a lithium iron phosphate particle according to the embodiments of the present application may be used for preparing the lithium iron phosphate particle of the present application. The method for preparing a lithium iron phosphate particle according to the embodiments of the present application includes: providing raw materials including at least a lithium source, an iron source, a phosphorus source, a carbon source, a carbon film-forming agent, and a modifying agent, and performing at least two sintering steps, where a first sintering is performed at a temperature of 500°C to 760°C, and a carbon content of a material after the first sintering is 0.01 wt% to 0.79 wt%; and a second sintering is performed at a temperature of 700°C to 800°C, and a carbon content of a material after the second sintering is 0.8 wt% to 2.0 wt%.

In some embodiments, the method for preparing a lithium iron phosphate particle includes: providing raw materials including at least a lithium source, an iron source, a phosphorus source, a carbon source, a carbon film-forming agent, and a modifying agent, and performing at least two sintering steps, where the first sintering is performed at a temperature of 550°C to 720°C, and the carbon content of the material after the first sintering is 0.05 wt% to 0.4 wt%; and the second sintering is performed at a temperature of 720°C to 780°C, and the carbon content of the material after the second sintering is 1.0 wt% to 1.6 wt%.

In some embodiments, the temperature of the first sintering is 500°C, 510°C, 520°C, 530°C, 540°C, 550°C, 560°C, 570°C, 580°C, 590°C, 600°C, 610°C, 620°C, 630°C, 640°C, 650°C, 655°C, 660°C, 670°C, 680°C, 690°C, 700°C, 710°C, 720°C, 730°C, 740°C, 750°C, 760°C, or 760°C, or a value within a range between any two of the above values.

In some embodiments, the temperature of the second sintering is 700°C, 710°C, 720°C, 730°C, 740°C, 750°C, 755°C, 760°C, 770°C, 780°C, 790°C, or 800°C, or a value within a range between any two of the above values.

In some embodiments, the carbon content of the material after the first sintering is 0.01 wt%, 0.05 wt%, 0.10 wt%, 0.15 wt%, 0.2 wt%, 0.25 wt%, 0.3 wt%, 0.35 wt%, 0.4 wt%, 0.45 wt%, 0.5 wt%, 0.55 wt%, 0.6 wt%, 0.65 wt%, 0.7 wt%, 0.75 wt%, or 0.79 wt%, or a value within a range between any two of the above values.

In some embodiments, the carbon content of the material after the second sintering is 0.8 wt% to 2.0 wt%. It may be 0.8 wt%, 0.9 wt%, 1 wt%, 1.1, 1.2 wt%, 1.3 wt%, 1.4 wt%, 1.5 wt%, 1.6 wt%, 1.7 wt%, 1.8 wt%, 1.9 wt%, or 2.0 wt%, or a value within a range between any two of the above values.

In the method for preparing a lithium iron phosphate particle according to the embodiments of the present application, two sintering steps are performed. By controlling the temperature of the first sintering within the above range and the carbon content of the intermediate after sintering within the above range, the lithium iron phosphate precursor obtained after the first sintering can have a large particle size, directly improving the powder compaction density and electrode plate compaction density of the final product. In addition, by adding a relatively low amount of carbon source in the first sintering, the blocking effect of the carbon layer on the growth process of the lithium iron phosphate particle is greatly reduced. This facilitates the crystallization and growth of the particle at a lower temperature, and also facilitates the solid-state diffusion reaction between the modifying agent and the lithium iron phosphate material, thereby achieving a high concentration of metal ion modification. Compared with the conventional method that uses a high temperature to achieve particle growth, the above preparation method of the present application can first synthesize large particles at a lower temperature. This can alleviate cracking of the carbon layer on the particle surface at high temperatures and enhance the compactness of the surface carbon. Meanwhile, during the first sintering, the carbon source can effectively reduce trivalent iron in the raw materials, improving product purity and stability. By controlling the temperature of the second sintering within the above range and the carbon content of the sintered material to be 0.8 wt% to 2.0 wt%, carbon can be coated on the surfaces of the lithium iron phosphate particles, forming a lithium iron phosphate material having a uniform and dense carbon coating layer that coats each particle, greatly improving the surface conductivity of the particles.

In some embodiments, the lithium iron phosphate particle contains at least one of Ti, V, Mg, and/or Nb, and calculated based on a total weight of the lithium iron phosphate particle, a content of the elements is 1000 ppm to 10000 ppm.

In some embodiments, the content of the elements is 2500 ppm to 6000 ppm. Specifically, it may be 2500 ppm, 2600 ppm, 2700 ppm, 2800 ppm, 2900 ppm, 3000 ppm, 3100 ppm, 3200 ppm, 3300 ppm, 3400 ppm, 3500 ppm, 3600 ppm, 3700 ppm, 3800 ppm, 3900 ppm, 4000 ppm, 4100 ppm, 4200 ppm, 4300 ppm, 4400 ppm, 4500 ppm, 4600 ppm, 4700 ppm, 4800 ppm, 4900 ppm, 5000 ppm, 5100 ppm, 5200 ppm, 5300 ppm, 5400 ppm, 5500 ppm, 5600 ppm, 5700 ppm, 5800 ppm, 5900 ppm, or 6000 ppm, or a value within a range between any two of the above values.

By doping the lithium iron phosphate of the embodiments of the present application with one or more of the above elements and controlling the content thereof within the above range, metal bulk phase modification of the lithium iron phosphate particle can be better achieved while improving the average primary particle size of the lithium iron phosphate particle. This further enhances the bulk phase ion transport capability of the lithium iron phosphate particle and better solves the problem of poor kinetic performance inherent in large particles.

In some embodiments, in the method for preparing a lithium iron phosphate particle, a first pulverization is performed after the first sintering, and a second pulverization is performed after the second sintering, where a Dv50 of a product after the first pulverization is 300 nm to 1200 nm; and a Dv50 of a product after the second pulverization is 500 nm to 5000 nm.

In some embodiments, in the method for preparing a lithium iron phosphate particle, a first pulverization is performed after the first sintering, and a second pulverization is performed after the second sintering, where a Dv50 of a product after the first pulverization is 400 nm to 1100 nm; and a Dv50 of a product after the second pulverization is 300 nm to 2500 nm.

In some embodiments, the Dv50 of the product after the first pulverization is 300 nm, 350 nm, 400 nm, 500 nm, 550 nm, 600 nm, 700 nm, 800 nm, 900 nm, 1000 nm, 1100 nm, or 1200 nm, or a value within a range between any two of the above values.

In some embodiments, the Dv50 of the product after the second pulverization is 500 nm, 600 nm, 700 nm, 800 nm, 900 nm, 1000 nm, 1100 nm, 1200 nm, 1300 nm, 1400 nm, 1500 nm, 1600 nm, 1700 nm, 1800 nm, 1900 nm, 2000 nm, 2300 nm, 2500 nm, 2700 nm, 3000 nm, 3300 nm, 3500 nm, 3700 nm, 4000 nm, 4300 nm, 4500 nm, 4700 nm, or 5000 nm, or a value within a range between any two of the above values.

Herein, the term "Dv50" refers to the particle size corresponding to a cumulative volume particle size distribution percentage of 50%. The measurement of Dv50 may be performed using the measurement method described in the examples.

In the method for preparing a lithium iron phosphate particle according to the embodiments of the present application, pulverization is performed after the two sintering steps. By performing the first pulverization after the first sintering so that the Dv50 of the product is 300 nm to 1200 nm, the blocking effect of the carbon material and modifying elements on crystal growth can be avoided, and a micron-sized lithium iron phosphate precursor can be obtained. By performing the second pulverization after the second sintering so that the Dv50 of the product is 500 nm to 3000 nm, lithium iron phosphate particles having a desired particle size can be obtained, and a uniform and dense carbon coating layer that coats each particle can be formed, greatly improving the surface conductivity of the particles.

In some embodiments, the method for preparing a lithium iron phosphate particle includes: providing raw materials including at least a lithium source, an iron source, a phosphorus source, a carbon source, a carbon film-forming agent, and a modifying agent, where mixing ratios of the lithium source, the iron source, and the phosphorus source, in terms of atomic molar amounts of the elements, satisfy Fe:P = (0.96-0.985):1 and Li:Fe = (1.0-1.1):(0.95-1.1); and a weight ratio of the carbon source to the carbon film-forming agent satisfies carbon source:carbon film-forming agent = 9:1 to 2:8.

In some embodiments, in terms of atomic molar amounts of the elements, the mixing ratio of the iron source to the phosphorus source satisfies Fe:P = 0.96:1, Fe:P = 0.965:1, Fe:P = 0.97:1, Fe:P = 0.975:1, Fe:P = 0.98:1, or Fe:P = 0.985:1.

In some embodiments, in terms of atomic molar amounts of the elements, the mixing ratio of the lithium source to the iron source satisfies Li:Fe = 1.0:1.1, Li:Fe = 0.99:1.1, Li:Fe = 0.98:1.1, Li:Fe = 0.97:1.1, Li:Fe = 0.96:1.1, or Li:Fe = 0.95:1.1.

In some embodiments, the weight ratio of the carbon source to the carbon film-forming agent may be 9:1, 8:2, 7:3, 6:4, 5:5, 4:6, 3:7, or 2:8.

Using the raw materials containing the lithium source, iron source, phosphorus source, carbon source, modifying agent, and carbon film-forming agent in the above ratios, good modification can be achieved, and the resulting lithium iron phosphate particle precursor can be formed into relatively large particles. Therefore, the average primary particle size, carbon content, BET specific surface area, and z value of the lithium iron phosphate particle according to the first aspect of the present application can be well achieved. Specifically, as described above, by configuring the lithium iron phosphate particle of the embodiments of the present application to have an average primary particle size of 500 nm to 3000 nm, the particle can maintain a suitable micron-sized dimension, thereby avoiding the problems of interfacial side reactions and processing difficulties caused by nanosizing of the particle (in the art, there are difficulties in processing nanosized particles), and preventing the reduction in kinetic performance due to an excessively large particle size. Furthermore, by configuring the lithium iron phosphate particle of the embodiments of the present application to have a BET specific surface area of 3 m²/g to 8 m²/g, the stirring of a slurry containing the lithium iron phosphate particle and the increase of the solid content of the slurry can be facilitated, thereby alleviating the processing problems of a battery cell and further increasing the volumetric energy density of a battery. Further optionally, by configuring the ratio z of the BET specific surface area to Cx of the lithium iron phosphate particle of the embodiments of the present application to satisfy 1.5 ≤ z ≤ 8.5, the carbon contained in the lithium iron phosphate particle can be made more uniform and dense, and each particle can be coated, thereby improving the surface conductivity of the particle.

In some embodiments, in the method for preparing a lithium iron phosphate particle, the lithium source is a lithium compound, including one or more of lithium dihydrogen phosphate, lithium oxalate, lithium carbonate, lithium oxide, lithium hydroxide, and lithium acetate. In some embodiments, the lithium source is lithium carbonate.

In some embodiments, in the method for preparing a lithium iron phosphate particle, the iron source is an iron compound, including at least one of iron hydroxide, ferrous chloride, diiron trioxide, iron phosphate, iron pyrophosphate, ferrous oxalate, iron powder, iron nitrate, triiron tetroxide, and iron oxyhydroxide. In some embodiments, the iron source is diiron trioxide.

In some embodiments, in the method for preparing a lithium iron phosphate particle, the phosphorus source is a phosphorus compound, including one or more of phosphoric acid, ammonium dihydrogen phosphate, and diammonium hydrogen phosphate. In some embodiments, the phosphorus source is phosphoric acid.

In some embodiments, in the method for preparing a lithium iron phosphate particle, the modifying agent includes at least one of titanium dioxide, vanadium pentoxide, tetrabutyl titanate, ammonium metavanadate, niobium ethoxide, niobium oxalate, niobium pentoxide, magnesium hydroxide, and magnesium nitrate. In some embodiments, the modifying agent is titanium dioxide.

In some embodiments, in the method for preparing a lithium iron phosphate particle, the carbon source includes at least one of citric acid, glucose, sucrose, starch, fructose, and lactose. In some embodiments, the carbon source is glucose.

In some embodiments, in the method for preparing a lithium iron phosphate particle, the carbon film-forming agent includes one or a combination of two or more of polyethylene glycol, polyaniline, polyacrylonitrile, polyvinylpyrrolidone, and polyvinyl alcohol. In some embodiments, the carbon film-forming agent is polyaniline.

By selecting the above substances as the lithium source, iron source, phosphorus source, modifying agent, carbon source, and carbon film-forming agent used in the method for preparing a lithium iron phosphate particle of the embodiments of the present application, the average primary particle size, carbon content, BET specific surface area, and z value of the lithium iron phosphate particle according to the first aspect of the present application can be well achieved. Therefore, the large particle size of the lithium iron phosphate particle of the embodiments of the present application is better achieved, while excellent kinetic performance is achieved when it is used as a positive electrode material.

In some embodiments, a heating rate in each of the first sintering and the second sintering is independently 2°C/min to 20°C/min, a constant-temperature holding time of the first sintering is 1 h to 6 h, and a constant-temperature holding time of the second sintering is 2 h to 12 h.

In some embodiments, a heating rate in each of the first sintering and the second sintering is independently 2°C/min, 5°C/min, 7°C/min, 10°C/min, 13°C/min, 15°C/min, 17°C/min, or 20°C/min.

In some embodiments, a constant-temperature sintering time of the first sintering is 1-6 h. In some embodiments, the constant-temperature sintering time of the first sintering is 1 h, 1.5 h, 2 h, 2.5 h, 3 h, 3.5 h, 4 h, 4.5 h, 5 h, 5.5 h, or 6 h.

In some embodiments, a constant-temperature sintering time of the second sintering is 2-12 h. In some embodiments, the constant-temperature sintering time of the second sintering is 1 h, 1.5 h, 2 h, 2.5 h, 3 h, 3.5 h, 4 h, 4.5 h, 5 h, 5.5 h, 6 h, 6.5 h, 7 h, 7.5 h, 8 h, 8.5 h, 9 h, 9.5 h, 10 h, 10.5 h, 11 h, 11.5 h, or 12 h.

By independently controlling the heating rates and constant-temperature holding times in the first sintering and the second sintering within the above ranges, it is possible to prevent excessive side reactions during the sintering process due to excessively rapid heating, which would otherwise affect the average primary particle size, carbon content, BET specific surface area, and z value of the resulting lithium iron phosphate particle. Therefore, the large particle size of the lithium iron phosphate particle of the embodiments of the present application is better achieved, while excellent kinetic performance is achieved when it is used as a positive electrode material.

In some embodiments, after the first sintering and before the second sintering, a carbon coating is performed on the product after the first sintering, and based on a total weight of the product after the first sintering, an amount of the carbon coating is 0.01 wt% to 1.99 wt%. In some embodiments, based on the total weight of the product after the first sintering, the amount of the carbon coating is 0.2 wt% to 1.6 wt%, for example, 0.2 wt%, 0.3 wt%, 0.4 wt%, 0.5 wt%, 0.6 wt%, 0.7 wt%, 0.8 wt%, 0.9 wt%, 1.0 wt%, 1.1 wt%, 1.2 wt%, 1.3 wt%, 1.4 wt%, 1.5 wt%, or 1.6 wt%, or a value within a range between any two of the above values.

By performing the carbon coating on the product after the first sintering in the above content range after the first sintering and before the second sintering, a uniform and dense carbon coating layer that coats each particle can be formed on the surfaces of the lithium iron phosphate particles during the second sintering.

In some embodiments, the carbon coating is performed by vapor deposition during the sintering process, or by carbonizing a carbon source at a high temperature for carbon coating.

In the method for preparing a lithium iron phosphate particle according to the embodiments of the present application, the carbon coating method is not particularly limited. In some embodiments, the carbon coating is performed by a vapor deposition method for carbon coating on the lithium iron phosphate particle, thereby forming a uniform and dense carbon coating layer that coats each particle on the surfaces of the lithium iron phosphate particle.

In some embodiments, after the first sintering and after the second sintering, the sintered product is pulverized, and the pulverization includes one or more of grinding, sand milling, mechanical crushing, and jet milling.

In the method for preparing a lithium iron phosphate particle according to the embodiments of the present application, the pulverization method is not particularly limited. By the above specific pulverization methods, the desired average primary particle size can be advantageously obtained.

### [Positive Electrode Plate]

The positive electrode plate includes a positive electrode current collector and a positive electrode film layer disposed on at least one surface of the positive electrode current collector. The positive electrode film layer includes the lithium iron phosphate particle according to the first aspect of the present application as a positive electrode material. When applied to a secondary battery, the lithium iron phosphate particle of the present application has a large particle size and also has excellent kinetic performance when used as a positive electrode material.

In some embodiments, the positive electrode current collector may be a metal foil or a composite current collector. For example, as the metal foil, the battery aluminum foil of the present application is used. The composite current collector may include a polymer material substrate and a metal layer formed on at least one surface of the polymer material substrate. The composite current collector may be formed by depositing the battery aluminum foil of the present application on a substrate of a polymer material, such as polypropylene (PP), polyethylene terephthalate (PET), polybutylene terephthalate (PBT), polystyrene (PS), or polyethylene (PE).

In some embodiments, the positive electrode material may be a positive electrode material known in the art for use in batteries. As an example, the positive electrode material may include at least one of the following: lithium-containing phosphates having an olivine structure, lithium transition metal oxides, and modified compounds thereof. However, the present application is not limited to these materials, and other conventional materials that may be used as positive electrode materials for batteries may also be used. These positive electrode materials may be used alone or in combination of two or more. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also known as NCM₃₃₃), LiNi_{0.5}Co_{0.2}Mn_{0.3}O₂ (also known as NCM₅₂₃), LiNi_{0.5}Co_{0.25}Mn_{0.25}O₂ (also known as NCM₂₁₁), LiNi_{0.6}Co_{0.2}Mn_{0.2}O₂ (also known as NCM₆₂₂), and LiNi_{0.8}Co_{0.1}Mn_{0.1}O₂ (also known as NCM₈₁₁)), lithium nickel cobalt aluminum oxide (such as LiNi_{0.85}Co_{0.15}Al_{0.05}O₂), and modified compounds thereof. Examples of the lithium-containing phosphate with the olivine structure may include, but are not limited to, at least one of lithium iron phosphate (such as LiFePO₄ (also known as LFP)), a composite material of lithium iron phosphate and carbon, lithium manganese phosphate (such as LiMnPO₄), a composite material of lithium manganese phosphate and carbon, lithium iron manganese phosphate, and a composite material of lithium manganese iron phosphate and carbon.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluoroacrylate resin.

In some embodiments, the positive electrode film layer further optionally includes a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by the following method: dispersing the above components for preparing the positive electrode plate, for example, the positive electrode material, the conductive agent, the binder, and any other components, in a solvent (for example, N-methylpyrrolidone) to form a positive electrode slurry; coating the positive electrode slurry on a positive electrode current collector, followed by processes such as drying and cold pressing, to obtain the positive electrode plate.

### [Negative Electrode Plate]

The negative electrode plate includes a negative electrode current collector and a negative electrode film layer disposed on at least one surface of the negative electrode current collector. The negative electrode film layer includes a negative electrode active material.

As an example, the negative electrode current collector has two opposite surfaces in its own thickness direction, and the negative electrode film layer is arranged on either or both of the two opposite surfaces of the negative electrode current collector.

In some embodiments, the negative electrode current collector may be a metal foil or a composite current collector. For example, as the metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material for batteries well-known in the art. As an example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, silicon oxide, a silicon-carbon composite, a silicon-nitrogen composite, and silicon alloy. The tin-based material may be at least one selected from elemental tin, a tin oxide compound, and tin alloy. However, the present application is not limited to these materials, and other conventional materials used as negative electrode active materials for batteries may also be used. These negative electrode active materials may be used alone, or in combination of two or more.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be at least one selected from superconducting carbon, acetylene black, carbon black, Ketjen black, carbon dot, carbon nanotube, graphene, and carbon nanofiber.

In some embodiments, the negative electrode film layer further optionally includes other adjuvants such as a thickener (for example, sodium carboxymethyl cellulose (CMC-Na)).

In some embodiments, the negative electrode plate may be prepared by the following method: dispersing the components for preparing the negative electrode plate, such as the negative electrode active material, the conductive agent, the binder, and any other components, in a solvent (e.g., deionized water) to form a negative electrode slurry; and coating the negative electrode slurry on a negative electrode current collector, followed by drying, coldpressing, and other processes, to obtain the negative electrode plate.

### [Electrolyte]

The electrolyte plays a role in conducting ions between the positive electrode plate and the negative electrode plate. The type of the electrolyte is not specifically limited in the present application and may be selected according to the requirements. For example, the electrolyte may be liquid, gelled, or all-solid.

In some embodiments, the electrolyte is an electrolyte solution. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluorooxalatoborate, lithium bisoxalatoborate, lithium difluorobis(oxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes an additive. For example, the additive may include a negative electrode film forming additive and a positive electrode film forming additive, and may further include an additive that can improve particular performance of the battery, for example, an additive that improves the overcharging performance of the battery, an additive that improves high or low temperature performance of the battery, or the like.

### [Separator]

In some embodiments, the secondary battery further includes a separator. The type of the separator is not particularly limited in the present application, and any well-known porous separator with good chemical stability and mechanical stability may be selected.

In some embodiments, the material of the separator may be at least one selected from the group consisting of glass fiber, non-woven fabric, polyethylene, polypropylene, and polyvinylidene fluoride. The separator may be a single-layer film or a multilayer composite film, which is not specially limited. When the separator is a multi-layer composite film, the materials of the layers may be the same or different, and there is no particular limitation.

### [Secondary battery]

An embodiment of the present application provides a secondary battery, which includes a positive electrode plate.

Generally, the secondary battery includes a positive electrode plate, a negative electrode plate, an electrolyte, and a separator. During the charge and discharge process of the battery, active ions are reversibly intercalated into and deintercalated from the positive electrode plate and the negative electrode plate. The electrolyte plays a role in conducting ions between the positive electrode plate and the negative electrode plate. The separator is arranged between the positive electrode plate and the negative electrode plate to mainly play a role in preventing a short circuit between a positive electrode and a negative electrode while allowing ions to pass through.

In some embodiments, the positive electrode plate, the negative electrode plate, and the separator may be fabricated into an electrode assembly through a winding process or a lamination process.

In some embodiments, the secondary battery may include an outer package. The outer package may be used to encapsulate the above electrode assembly and electrolyte.

In some embodiments, the outer package of the secondary battery may be a hard case, such as a hard plastic case, an aluminum case, or a steel case. The outer package of the secondary battery may alternatively be a soft package, such as a pouch-type soft package. The material of the soft package may be plastic, and examples of plastic may include polypropylene, polybutylene terephthalate, polybutylene succinate, and the like.

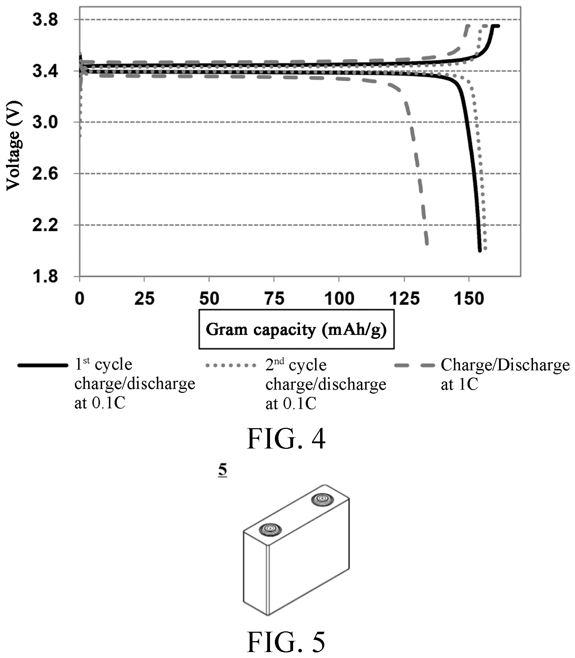

The shape of the secondary battery is not particularly limited in the present application, and the secondary battery may be cylindrical, prismatic, or in any other shape. For example, FIG. 5 shows a prismatic secondary battery 5 as an example.

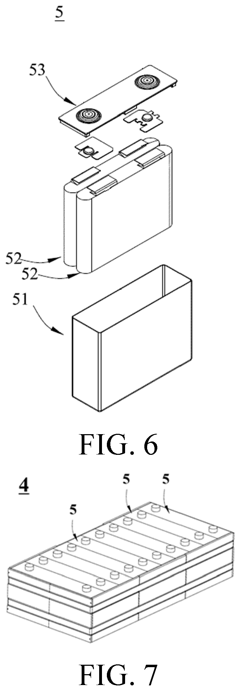

In some embodiments, referring to FIG. 6, the outer package may include a case 51 and a cover plate 53. The case 51 may include a bottom plate and side plates connected to the bottom plate, and the bottom plate and the side plates form an accommodating cavity. The case 51 is provided with an opening in communication with the accommodating cavity, and the cover plate 53 may cover the opening to seal the accommodating cavity. The positive electrode plate, the negative electrode plate, and the separator may form an electrode assembly 52 through a winding process or a lamination process. The electrode assembly 52 is encapsulated in the accommodating cavity. The electrolyte solution impregnates the electrode assembly 52. The number of the electrode assemblies 52 included in the secondary battery 5 may be one or more, and the specific number may be selected by those skilled in the art according to the specific actual requirements.

In some embodiments, the secondary battery may be assembled into a battery module, the battery module may include one or more secondary batteries, and the specific number may be selected by those skilled in the art according to the application and capacity of the battery module.

FIG. 7 shows a battery module 4 as an example. Referring to FIG. 7, in the battery module 4, multiple secondary batteries 5 may be sequentially arranged along a length direction of the battery module 4. Of course, they may also be arranged in any other manner. Further, the multiple secondary batteries 5 may be secured through fasteners.

Optionally, the battery module 4 may further include a shell with an accommodating space. The multiple secondary batteries 5 are accommodated in the accommodating space.

In some embodiments, the battery module may also be assembled into a battery pack, the number of the battery modules included in the battery pack may be one or more, and the specific number may be selected by those skilled in the art according to the application and capacity of the battery pack.

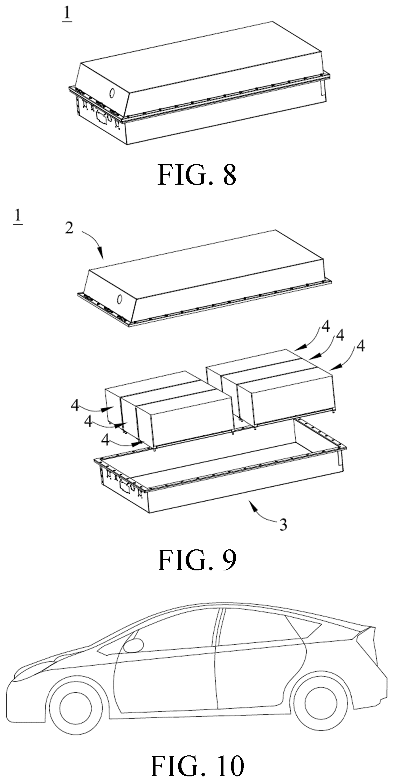

FIG. 8 and FIG. 9 show a battery pack 1 as an example. Referring to FIG. 8 and FIG. 9, the battery pack 1 may include a battery box and multiple battery modules 6 arranged in the battery box. The battery box includes an upper box body 2 and a lower box body 3. The upper box body 2 can cover the lower box body 3 to form an enclosed space for accommodating the battery modules 4. The multiple battery modules 4 may be arranged in the battery box in any way.

### [Electrical Device]

In addition, the present application further provides an electrical device, which includes at least one of the secondary battery, the battery module, or the battery pack provided in the present application. The secondary battery, the battery module, or the battery pack may be used as a power source for the electrical device, or may be used as an energy storage unit of the electrical device. The electrical device may include, but is not limited to, a mobile device (e.g., a mobile phone, a laptop computer), an electric vehicle (e.g., an all-electric vehicle, a hybrid electric vehicle, a plug-in hybrid electric vehicle, an electric bicycle, an electric scooter, an electric golf cart, an electric truck), an electric train, a ship, a satellite, an energy storage system, and the like.

For an electrical device, the secondary battery, the battery module, or the battery pack may be selected according to its usage requirements.

FIG. 10 shows an electrical device as an example. The electrical device is an all-electric vehicle, a hybrid electric vehicle, or a plug-in hybrid electric vehicle. To meet the requirements of the electrical device for high power and high energy density of secondary batteries, a battery pack or a battery module may be adopted.

As another example, the device may be a mobile phone, a tablet computer, a notebook computer, or the like. The device is generally required to be lightweight and thin, and may use a secondary battery as a power source.

### Examples

Examples of the present application will be described below. The examples described below are exemplary and only intended to explain the present application, and cannot be construed as limitations on the present application. If the specific technologies or conditions are not specified in the examples, the technologies or conditions described in the literature in the art or the product manual shall be followed. The used reagents or instruments without manufacturers indicated are all conventional commercially available products.

### Example 1

### 1. Preparation of Lithium Iron Phosphate Particle

Weigh respectively lithium carbonate, diiron trioxide, phosphoric acid, glucose, titanium dioxide (with the addition amount of titanium dioxide satisfying that the content of titanium in the obtained lithium iron phosphate particle is 5000 ppm, based on the total weight of the lithium iron phosphate particle), and polyaniline, where the weight ratios of Li element, Fe element, and P element satisfy Fe:P = 0.968:1 and Li:Fe = 1:0.98, and the weight ratio of glucose to polyaniline satisfies glucose:polyaniline = 1:2. The addition amount of glucose satisfies that after the first sintering, the carbon content accounts for 0.15% of the weight of the lithium iron phosphate precursor. Add water to the above substances to obtain a mixed slurry.

Mix the mixed slurry uniformly using a ball mill, then perform sand milling to obtain a slurry with a solid content of 38% and a Dv50 of 0.40 µm, followed by spray drying (with a negative pressure of -650 Pa to -200 Pa for the high-speed spray dryer, an inlet temperature of 300°C to 360°C, and an outlet temperature of 100°C to 140°C). Load the dried reaction material into a sintering furnace, and perform the first sintering with a heating rate controlled at 5°C/min, a holding temperature controlled at 650°C, and a holding time of 4 h. After the material is cooled, pulverize it using a mechanical mill to obtain a powder.

Add glucose as a carbon source and polyaniline as a carbon film-forming agent to the obtained powder, then mix with water to obtain a material with a solid content of 40%. The addition amounts of glucose and polyaniline satisfy that the carbon content of the product after the second sintering is 1.2% (based on the total weight of the lithium iron phosphate particle), and the weight ratio of glucose to polyaniline satisfies glucose:polyaniline = 1:2. Treat the above material by ball milling and sand milling to obtain a slurry, where the Dv50 of insoluble matter in the slurry is 550 nm. Perform spray drying (with a negative pressure of - 650 Pa to -200 Pa for the high-speed spray dryer, an inlet temperature of 300°C to 360°C, and an outlet temperature of 100°C to 140°C). Load the dried reaction material into a sintering furnace, and perform the second low-temperature sintering (with a heating rate controlled at 5°C/min, a sintering temperature of 750°C, and a sintering time of 4 h). After the material is cooled, perform a second pulverization to an average primary particle size of 870 nm, then perform magnetic separation to obtain a lithium iron phosphate particle having a carbon content of 1.2% and a Ti element content of 5000 ppm in the lithium iron phosphate particle.

Observe the obtained lithium iron phosphate particle under a scanning electron microscope (SEM), and the results are shown in FIG. 1a. Observe the obtained lithium iron phosphate particle under a transmission electron microscope (TEM), and the results are shown in FIG. 1b and FIG. 1c.

### 2. Preparation of Positive Electrode Plate

Fully dissolve 2.0 wt% of polyvinylidene fluoride binder in N-methylpyrrolidone (NMP). Then, add 1.0 wt% of Super P, 0.5 wt% of carbon nanotubes, and 96.5 wt% of the above positive electrode material, and stir and mix uniformly to obtain a positive electrode slurry. Uniformly apply the slurry onto a surface of an aluminum foil as a current collector, then transfer it to a vacuum drying oven for complete drying. Roll and punch the dried electrode plate to obtain a positive electrode plate.

### 3. Preparation of Negative Electrode Plate

Disperse an active material of artificial graphite, a conductive agent of carbon black, a binder of styrene-butadiene rubber (SBR), and a thickener of sodium carboxymethyl cellulose (CMC Na) in a solvent of deionized water at a weight ratio of 96.7:1.3:0.8:1.2, and mix uniformly to prepare a negative electrode slurry. Apply the negative electrode slurry uniformly onto a copper foil as a negative electrode current collector in one or more times, and then subject it to drying, cold pressing, and slitting to obtain a negative electrode plate.

### 4. Preparation of Electrolyte Solution

In a glove box under an argon atmosphere (H₂O < 0.1 ppm, O₂ < 0.1 ppm), uniformly mix an organic solvent of ethylene carbonate (EC) and ethyl methyl carbonate (EMC) at a volume ratio of 3:7, and dissolve a LiPF₆ lithium salt in the organic solvent to prepare a solution with a weight content of 12.5%, thereby obtaining an electrolyte solution.

### 5. Separator

Use a polypropylene film as the separator.

### 6. Preparation of lithium-ion battery

Stack the positive electrode plate, the separator, and the negative electrode plate in order, such that the separator is positioned between the positive and negative electrode plates to provide isolation, then wind to obtain a bare battery cell. Weld tabs to the bare battery cell, place the bare battery cell into an aluminum case, bake at 80°C to remove water, then inject the electrolyte solution and seal to obtain an uncharged battery. Subject the uncharged battery to subsequent processes such as resting, hot and cold pressing, formation, shaping, and capacity testing to obtain a lithium-ion battery of Example 1.

Perform performance tests described later on the lithium-ion battery obtained in Example 1, and the results are shown in 1.

### Example 2

Control the Dv50 particle size of the pulverized particles after the first sintering to be 350 nm, thereby obtaining a lithium iron phosphate particle having an average primary particle size of 500 nm. Otherwise, proceed in the same manner as in Example 1.

### Example 3

Control the Dv50 particle size of the pulverized particles after the first sintering to be 1200 nm, thereby obtaining a lithium iron phosphate particle having an average primary particle size of 3000 nm. Otherwise, proceed in the same manner as in Example 1.

### Example 4

Change the temperatures of the first sintering and the second sintering to 620°C and 740°C, respectively, and control the Ti content of the product to be 2500 ppm. Otherwise, proceed in the same manner as in Example 1.

### Example 5

Change the temperatures of the first sintering and the second sintering to 655°C and 755°C, respectively, and adjust the Ti content to be 6000 ppm. Otherwise, proceed in the same manner as in Example 1.

### Example 6

Replace the modifying element Ti with V. Otherwise, proceed in the same manner as in Example 1.

### Example 7

Replace the modifying element Ti with Nb. Otherwise, proceed in the same manner as in Example 1.

### Example 8

Adjust the lithium iron phosphate particle to have an average primary particle size of 920 nm, a BET specific surface area of 3.0 m²/g, and a carbon content of 0.8 wt%. Otherwise, proceed in the same manner as in Example 1.

### Example 9

Adjust the lithium iron phosphate particle to have an average primary particle size of 790 nm, a BET specific surface area of 8.0 m²/g, and a carbon content of 1.4 wt%. Otherwise, proceed in the same manner as in Example 1.

### Example 10

Adjust the carbon content after the first sintering to be 0.05 wt%, and adjust the product to have an average primary particle size of 1250 nm, a BET specific surface area of 6.0 m²/g, and a carbon content of 1.2 wt%. Otherwise, proceed in the same manner as in Example 1.

### Example 11

Adjust the lithium iron phosphate particle to have an average primary particle size of 520 nm and a BET specific surface area of 6.8 m²/g, and adjust the carbon content after the first sintering to be 0.4 wt%. Otherwise, proceed in the same manner as in Example 1.

### Example 12

Adjust the product to have a BET specific surface area of 7.2 m²/g and a carbon content of 1.6 wt%. Otherwise, proceed in the same manner as in Example 1.

### Example 13

Adjust the product to have a BET specific surface area of 7.8 m²/g and a carbon content of 2 wt%. Otherwise, proceed in the same manner as in Example 1.

### Example 14

Adjust the temperature of the first sintering to 620°C and the temperature of the second sintering to 730°C, such that the weight ratio of glucose to polyaniline satisfies glucose:polyaniline = 1:4, and the lithium iron phosphate particle has a BET specific surface area of 3.0 m²/g and a carbon content of 2 wt%. Otherwise, proceed in the same manner as in Example 1.

### Example 15

Adjust the lithium iron phosphate particle to have a BET specific surface area of 8.0 m²/g and a carbon content of 0.94 wt%. Otherwise, proceed in the same manner as in Example 1.

### Example 16

Adjust the lithium iron phosphate particle to have an average primary particle size of 650 nm, and adjust the Dv50 after the first sintering to be 450 nm. Otherwise, proceed in the same manner as in Example 1.

### Example 17

Adjust the lithium iron phosphate particle to have an average primary particle size of 2500 nm and a BET specific surface area of 5.5 m²/g. Otherwise, proceed in the same manner as in Example 1.

### Comparative Example 1

Adjust the lithium iron phosphate particle to have a BET specific surface area of 2.4 m²/g and a carbon content of 0.7 wt%. Otherwise, proceed in the same manner as in Example 1.

### Comparative Example 2

Adjust the carbon content to be 1.7 wt%, so that the product has a BET specific surface area of 12 m²/g. Otherwise, proceed in the same manner as in Example 1.

### Comparative Example 3

Adjust the temperature of the second sintering to 830°C, and adjust the product to have a BET specific surface area of 9.5 m²/g. Otherwise, proceed in the same manner as in Example 1.

### Comparative Example 4

Adjust the product to have an average primary particle size of 5000 nm and a BET specific surface area of 4 m²/g. Otherwise, proceed in the same manner as in Example 1.

### Comparative Example 5

Use a single sintering in the preparation process, and adjust the product to have a BET specific surface area of 12 m²/g. Otherwise, proceed in the same manner as in Example 1.

### Comparative Example 6

Adjust the temperature of the first sintering to 760°C, and adjust the product to have an average primary particle size of 3200 nm and a BET specific surface area of 4.8 m²/g. Otherwise, proceed in the same manner as in Example 1.

### Comparative Example 7

Control the carbon content of the product after the first sintering to be 1.1 wt%, and adjust the product to have an average primary particle size of 300 nm and a BET specific surface area of 13 m²/g. Otherwise, proceed in the same manner as in Example 1.

### Comparative Example 8

Using no carbon film-forming agent in the preparation process, adjust the temperature of the first sintering to 600°C and the temperature of the second sintering to 720°C, and adjust the carbon content of the product to be 0.5%. Otherwise, proceed in the same manner as in Example 1.

### I. Measurement of Relevant Parameters of Lithium Iron Phosphate Particle

### 1. Average Primary Particle Size

Use an argon ion beam to cut the electrode plate perpendicular to the large surface of the electrode plate, exposing a cross-section. Take a scanning electron microscope photograph of the cross-section, and perform a statistical analysis on the longest diameters of the lithium iron phosphate particles using a long-axis statistical method. Herein, the "average primary particle size" refers to the average value of the primary particle sizes of all particles, which is numerically equal to the total sum of the particle sizes divided by the total number of particles. The primary particle size in the cross-sectional image refers to the longest distance connecting two points on the edge of a particle. Specifically, in the scanning electron microscope photograph, count the total number of lithium iron phosphate particles having a primary particle size greater than 80 nm, and calculate the sum of the primary particle sizes of the lithium iron phosphate particles having a primary particle size greater than 80 nm. The average primary particle size of the lithium iron phosphate particles = the sum of the primary particle sizes of the lithium iron phosphate particles / the total number of the lithium iron phosphate particles. During the above particle size statistical process, particles having an average primary particle size of less than or equal to 80 nm are not included in the statistical range.

### 2. BET Specific Surface Area

Test the specific surface area by a gas adsorption method according to the GB/T 19587-2017 test standard, as follows: take the lithium iron phosphate particle as a sample, immerse the sample tube in liquid nitrogen at -196°C, measure the adsorption amount of nitrogen on the solid surface at different pressures under a relative pressure of 0.05 to 0.30, and obtain the monolayer adsorption amount of the sample based on the BET multilayer adsorption theory and its formula, thereby calculating the specific surface area of the material.

### 3. Dv50

Determine the Dv50 value of the lithium iron phosphate particle using a laser particle size analyzer (Malvern Master Size 3000) with reference to GB/T 19077.1-2016. In addition, the Dv10, Dv90, and Dv99 of the present application are measured in the same manner.

### 4. Carbon Content

Test the carbon content of the lithium iron phosphate particle by burning it in a high-frequency induction furnace followed by an infrared absorption method, with the specific testing procedure according to the standard GB/T 20123-2006/ISO 15350:2000.

### 5. Morphology Test

Test the lithium iron phosphate positive electrode materials of Example 10 and the prior art using a ZEISS Sigma 300 scanning electron microscope, and then perform testing with reference to the standard JY/T 010-1996 to observe the morphology of the samples. The observation results are shown in FIG. 2a and FIG. 2b.

### II. Measurement of Battery Performance

### 1. Gram Capacity of Battery

Mix 2.0000 g of a sample with 0.1111 g of conductive carbon black and 0.1111 g of PVDF (at a mass ratio of 0.9:0.05:0.05), then add 2.5 g of an organic solvent NMP (N-methylpyrrolidone). After thorough and uniform mixing, apply the mixture onto an aluminum foil to form a film having a thickness of 140 µm. Dry under vacuum at 120°C for 2 h. Punch the dried film into discs having a diameter of 13 mm using a puncher. Press the discs under a pressure of 10 MPa using a tablet press, and then maintain under vacuum at 120°C for 12 h. Weigh the positive electrode plate, where the loading amount of the active material is 11-12 mg. Assemble a coin cell in a glove box under an argon atmosphere, using a metallic lithium sheet as a negative electrode, an electrolyte solution of a mixed solvent of EC (ethylene carbonate) and DMC (1,2-dimethyl carbonate) at a volume ratio of 1:1, a LiPF₆ electrolyte, and a Celgard 2400 microporous polyethylene film as a separator. Test the electrochemical performance of the assembled battery using an LAND test instrument. Within a voltage range of 2.0 V to 3.75 V, perform constant-current charging/discharging twice at a rate of 0.1C, followed by constant-current charging/discharging twice at a rate of 1C, to test the specific capacity. The charging process includes a constant-voltage stage at a constant voltage of 3.75 V with a constant-voltage cut-off current of 50 µA. The gram capacity is the discharge capacity in the first cycle at a rate of 0.1C.

### 2. Capacity Ratio of Battery when Discharged to 3.2 V at 1C (η Value)

The preparation and testing procedure for the battery is as follows: mix 2.0000 g of a sample with 0.1111 g of conductive carbon black and 0.1111 g of PVDF (at a mass ratio of 0.9:0.05:0.05), then add 2.5 g of an organic solvent NMP (N-methylpyrrolidone). After thorough and uniform mixing, apply the mixture onto an aluminum foil to form a film having a thickness of 140 µm. Dry under vacuum at 120°C for 2 h. Punch the dried film into discs having a diameter of 13 mm using a puncher. Press the discs under a pressure of 10 MPa using a tablet press, and then maintain under vacuum at 120°C for 12 h. Weigh the positive electrode plate, where the loading amount of the active material is 11-12 mg. Assemble a coin cell in a glove box under an argon atmosphere, using a metallic lithium sheet as a negative electrode, an electrolyte solution of a mixed solvent of EC (ethylene carbonate) and DMC (1,2-dimethyl carbonate) at a volume ratio of 1:1, a LiPF₆ electrolyte, and a Celgard 2400 microporous polyethylene film as a separator. Test the electrochemical performance of the assembled battery using an LAND test instrument. Within a voltage range of 2.0 V to 3.75 V, perform constant-current charging/discharging twice at a rate of 0.1C, followed by constant-current charging/discharging twice at a rate of 1C, to test the specific capacity. The charging process includes a constant-voltage stage at a constant voltage of 3.75 V with a constant-voltage cut-off current of 50 µA.

Record a capacity value at a discharge voltage of 3.2 V as C1, and record a capacity value at a discharge voltage of 2.0 V as C2, then η = C1/C2, where the charging process includes constant-voltage charging at a constant voltage of 3.75 V with a constant-voltage cut-off current of 50 µA.

### 3. Solid Content of Slurry

Prepare an electronic balance (accuracy: 0.0001), an oven, and a glass drying dish. Take 8-10 g of a positive electrode slurry sample and evenly spread it onto the sample dish, and record the mass of the slurry before drying as A. Close the oven door and perform heating. As heating proceeds, the temperature inside the oven continuously rises until it reaches 130°C, and the heating time is 5 h. After drying, cool the sample in the oven, then take it out, and record the mass of the dried slurry. Perform drying multiple times, and after the sample mass reaches a constant weight, record the mass after drying as B. The solid content of the slurry = (A/B) × 100%.

### 4. Magnetic Material Content

1) Weigh 1 kg of a sample, place it into a plastic bucket, and add 6 L of deionized water. Use a plastic tube to cover a magnetic rod having a diameter of 24 mm and a length of 240 mm (with a magnetic field intensity of 6000 Gauss). Then, heat-seal using a heat sealer. Place the magnetic rod into the plastic bucket and seal it together, then stir at a rate of 60 revolutions per minute for 15 minutes.
2) Prepare another clean bucket, add 5 ± 0.2 L of deionized water into the bucket. Rinse the magnetic material on the plastic tube into the solvent. Reseal the magnetic rod, and repeat the above steps twice to ensure the accuracy of the extracted amount of the magnetic material.
3) Prepare a clean 1 L beaker. Rinse all the magnetic material on the plastic tube into the beaker. Use a magnet to hold the bottom of the beaker, and perform rinsing 1-2 times.
4) Measure 10 mL of deionized water using a graduated cylinder and add it into a 100 mL beaker. Then, measure 10 mL of 36%-38% hydrochloric acid and slowly add it into the beaker. Pour the prepared hydrochloric acid solution into the beaker, seal it, and then place it into an ultrasonic apparatus for ultrasonic treatment for 2 minutes.
5) After the ultrasonic treatment is completed, take out the beaker, and use a magnet on the outside of the bottom of the beaker to attract and aggregate the magnetic material. Pour the acid solution in the beaker into a waste liquid bucket. Rinse the magnetic material in the beaker three times, and inject an appropriate amount of deionized water for subsequent filtration.
6) Use a filter membrane having a pore size of 0.45 µm. After filtration, place the filter paper with the magnetic particles attached on its surface onto a slide of a cleanliness microscope, and place it into an oven to dry at 60°C for (10 ± 2) minutes. After drying, weigh the filter membrane and calculate the content of the magnetic material.

The higher the content of the magnetic material, the more severe the selfdischarge phenomenon of the battery cell, and the shorter the life of the battery.

### 5. Measurement of Kinetic Performance

The kinetic performance of the battery in the present application is specifically embodied by the measurement of direct current internal resistance (power performance).

### Power Performance Test at 25°C:

Capacity calibration: after maintaining the lithium-ion batteries prepared in the examples and the comparative examples at 25°C for 2 h, charge them at a constant current of 0.33C to 3.65 V, then charge them at a constant voltage of 3.65 V to 0.05C. After the charging is completed, let the tested batteries stand still at 25°C for 2 h, then discharge them at a direct current of 0.33C to 2.5 V, and record the room-temperature discharge capacity as C0.

Adjust SOC (state of charge): after maintaining the lithium-ion batteries whose capacities have been calibrated at 25°C for 2 h, discharge them at a discharge rate of 1/3 C0 for 144 min to adjust the capacity of the lithium-ion batteries to 10% SOC.

Power test: after allowing the lithium-ion batteries at 10% SOC to stand at 25°C for 2 h, discharge them at a discharge rate of 3C0 under a pulse current I for 30 s. Record the voltage before discharge at 3C0 as V1, and the voltage at the end of the 30 s discharge as V2. Calculate the value of the direct current internal resistance (V1-V2)/I, and this data can be used to characterize the power performance of the battery.

### III. Parameters and Performance in Examples and Comparative Examples

Batteries of the examples and the comparative examples were prepared according to the above methods, and various performance parameters were measured. The specific results are shown in Table 1.

**Table 1**

| **Lithium iron phosphate particle** | | | | | | | | **Preparation process** | | | | **Kinetic performance (DCR at 10% SOC and 25°C, mΩ)** | **Discharge gram capacity at 0.1C in coin cell (mAh/g)** | **Solid content (%)** | **Magnetic material content (ppm)** |
|---|---|---|---|---|---|---|---|---|---|---|---|---|---|---|---|
| **Example** | **Modifying element** | **Element content (ppm)** | **Average primary particle size (nm)** | **BET specific surface area (m²/g)** | **Carbon content (%)** | **η (%)** | **Z value** | **First sintering temperature** | **Carbon content after first sintering (%)** | **Dv50 particle size after first sintering (nm)** | **Second sintering temperature** | | | | |
| Example 1 | Ti | 5000 | 870 | 6.00 | 1.2 | 92.2 | 5.00 | 650°C | 0.15 | 550 | 750°C | 1200 | 158 | 61.50 | ≤1 |
| Example 2 | Ti | 5000 | 500 | 7.00 | 1.2 | 94.1 | 5.83 | 650°C | 0.15 | 350 | 750°C | 1000 | 159 | 60.42 | ≤1 |
| Example 3 | Ti | 5000 | 3000 | 5.00 | 1.2 | 90.1 | 4.17 | 650°C | 0.15 | 1200 | 750°C | 1320 | 154 | 62.58 | ≤1 |
| Example 4 | Ti | 2500 | 870 | 6.00 | 1.2 | 90 | 500 | 620°C | 0.15 | 550 | 740°C | 1250 | 155 | 61.50 | ≤1 |
| Example 5 | Ti | 6000 | 870 | 6.00 | 1.2 | 95 | 5.00 | 655°C | 0.15 | 550 | 755°C | 1150 | 154 | 61.50 | ≤1 |
| Example 6 | v | 5000 | 870 | 6.00 | 1.2 | 92.2 | 5.00 | 650°C | 0.15 | 550 | 750°C | 1215 | 158 | 61.50 | ≤1 |
| Example 7 | Nb | 5000 | 870 | 6.00 | 1.2 | 92.2 | 5.00 | 650°C | 0.15 | 550 | 750°C | 1220 | 159 | 61.50 | ≤1 |
| Example 8 | Ti | 5000 | 920 | 3.00 | 0.8 | 89.2 | 3.75 | 650°C | 0.15 | 550 | 750°C | 1350 | 152 | 64.00 | ≤1 |
| Example 9 | Ti | 5000 | 790 | 8.00 | 1.4 | 94.5 | 5.71 | 650°C | 0.15 | 550 | 750°C | 1140 | 160 | 60.57 | ≤1 |
| Example 10 | Ti | 5000 | 1250 | 6.00 | 1.2 | 90.5 | 5.00 | 650°C | 0.05 | 550 | 750°C | 1300 | 153 | 61.50 | ≤1 |
| Example 11 | Ti | 5000 | 520 | 6.80 | 1.2 | 93.8 | 5.67 | 650°C | 0.4 | 550 | 750°C | 1165 | 158.5 | 60.00 | ≤1 |
| Example 12 | Ti | 5000 | 870 | 7.20 | 1.6 | 92.3 | 4.50 | 650°C | 0.15 | 550 | 750°C | 1190 | 157.5 | 61.20 | ≤1 |
| Example 13 | Ti | 5000 | 870 | 7.80 | 2 | 92.5 | 3.90 | 650°C | 0.15 | 550 | 750°C | 1170 | 156 | 60.80 | ≤1 |
| Example 14 | Ti | 5000 | 870 | 3.00 | 2 | 88.5 | 1.50 | 620°C | 0.15 | 550 | 730°C | 1340 | 152 | 62.20 | ≤1 |
| Example 15 | Ti | 5000 | 870 | 8.00 | 0.94 | 91 | 8.50 | 650°C | 0.15 | 550 | 750°C | 1250 | 156 | 59.80 | ≤1 |
| Example 16 | Ti | 5000 | 650 | 6.00 | 1.2 | 93 | 5.00 | 650°C | 0.15 | 450 | 750°C | 950 | 158.5 | 61.00 | ≤1 |
| Example 17 | Ti | 5000 | 2500 | 5.50 | 1.2 | 91.2 | 4.42 | 650°C | 0.15 | 550 | 750°C | 1250 | 154 | 62.00 | ≤1 |
| Comparative Example 1 | Ti | 5000 | 870 | 2.40 | 0.7 | 82 | 3.43 | 650°C | 0.15 | 550 | 750°C | 1550 | 151 | 65.00 | ≤1 |
| Comparative Example 2 | Ti | 5000 | 870 | 12.00 | 1.7 | 93 | 7.06 | 650°C | 0.15 | 550 | 750°C | 1480 | 158 | 55.00 | ≤1 |
| Comparative Example 3 | Ti | 5000 | 870 | 9.50 | 1.2 | 85.6 | 7.92 | 650°C | 0.15 | 550 | 830°C | 1490 | 154 | 57.71 | 10 |
| Comparative Example 4 | Ti | 5000 | 5000 | 4.00 | 1.2 | 78.2 | 3.33 | 650°C | 0.15 | 550 | 750°C | 1703 | 150 | 63.67 | ≤1 |
| Comparative Example 5 | Ti | 5000 | 870 | 12.00 | 1.2 | 79.8 | 10.00 | Single sintering (790°C) | | | | 1816 | 150 | 55.00 | 20 |
| Comparative Example 6 | Ti | 5000 | 3200 | 4.80 | 1.2 | 86.7 | 4.00 | 760°C | 0.15 | 550 | 750°C | 1620 | 152 | 62.80 | ≤1 |
| Comparative Example 7 | Ti | 5000 | 300 | 13.00 | 1.2 | 89 | 10.83 | 650°C | 1.1 | 550 | 750°C | 1410 | 158 | 53.92 | ≤1 |
| Comparative Example 8 | Ti | 5000 | 870 | 6.00 | 0.5 | 78 | 12.00 | 600°C | 0.15 | 550 | 720°C | 2260 | 150 | 64.80 | ≤1 |

It can be seen from the contents of Table 1 that the average primary particle size, BET specific surface area, and carbon content of the lithium iron phosphate particles obtained in Examples 1 to 17 of the present application all meet the limitations of the present application. As a result, the η values are all greater than or equal to 88%, indicating that the batteries have strong discharge power performance. When the batteries are discharged to a low SOC (state of charge), they can still maintain good power performance, that is, the voltage drop of the batteries is small when the batteries are discharged with a large current at a low charge level. In addition, the kinetic performance values of the lithium iron phosphate particles in the examples are low, indicating that the batteries have excellent mechanical performance. The lithium iron phosphate particles have high gram capacity, the slurries have high solid content, and the magnetic material content is low, indicating that the batteries have excellent energy density and life characteristics.

Furthermore, it can be seen from Table 1 that in Comparative Examples 1 to 8, whether by changing the parameter characteristics of the lithium iron phosphate particles themselves or by changing the parameter characteristics of the preparation process, the resulting lithium iron phosphate particles all failed to meet the limitations of the present application. As a result, at least one or more of the particle size characteristics, kinetic performance, gram capacity, solid content of the slurry, or magnetic material content of the obtained lithium iron phosphate particles significantly decreased, obviously failing to meet the requirements of the present application.

It needs to be noted that the present application is not limited to the described embodiments. The above described embodiments are merely exemplary, and embodiments having substantially the same technical idea and the same effects within the scope of the technical solution of the present application are all included in the technical scope of the present application. In addition, other embodiments constructed by making various modifications conceivable to those skilled in the art to the embodiments and combining some of the constituent elements of the embodiments without departing from the scope of the present application are also included in the scope of the present application.

## Claims

1. A lithium iron phosphate particle, wherein the lithium iron phosphate particle has an average primary particle size of 500 nm to 3000 nm and a BET specific surface area of 3 m²/g to 8 m²/g, and
calculated based on a total weight of the lithium iron phosphate particle, a carbon content of the lithium iron phosphate particle is Cx wt%, wherein 0.8 ≤ Cx ≤ 2.0.

2. The lithium iron phosphate particle according to claim 1, wherein the lithium iron phosphate particle has an average primary particle size of 650 nm to 2500 nm; and/or
the lithium iron phosphate particle has a BET specific surface area of 4 m²/g to 7 m²/g; and/or
calculated based on the total weight of the lithium iron phosphate particle, a carbon content of the lithium iron phosphate particle is Cx wt%, wherein 1.0 ≤ Cx ≤ 1.6.

3. The lithium iron phosphate particle according to claim 1 or 2, wherein the lithium iron phosphate particle has a molecular formula of LiₘFeₓP_{y}OⱼQ_{q}, wherein Q comprises at least one of Al, Na, K, Mg, Cu, Mn, Cr, Zn, Pb, Ca, Co, Ni, Sr, Nb, V, Ti, B, S, Si, N, F, Cl, and Br, 0.95 ≤ m ≤ 1.15, 0.9 ≤ x ≤ 1, 0.95 ≤ y ≤ 1, 3.5 ≤ j ≤ 4, and 0 < q ≤ 0.1.

4. The lithium iron phosphate particle according to claim 3, wherein Q comprises at least one of Ti, V, Mg, and Nb, and
calculated based on the total weight of the lithium iron phosphate particle, a content of Ti, V, Mg, and/or Nb is 1000 ppm to 10000 ppm.

5. The lithium iron phosphate particle according to any one of claims 1 to 4, wherein the lithium iron phosphate particle is a single-crystal particle and/or a polycrystalline particle.

6. The lithium iron phosphate particle according to any one of claims 1 to 5, wherein the lithium iron phosphate particle has a capacity ratio η ≥ 88%, wherein η is defined as follows: a battery comprising the lithium iron phosphate particle as a positive electrode material is charged and discharged twice at a constant current of 0.1C within a voltage range of 2.0 V to 3.75 V, and then is charged and discharged once at a constant current of 1C; and in a charge-discharge test at a rate of 1C, a capacity value at a discharge voltage of 3.2 V is recorded as C1, a capacity value at a discharge voltage of 2.0 V is recorded as C2, and η = C1/C2, wherein a charging process comprises constant-voltage charging at a constant voltage of 3.75 V with a constant-voltage cut-off current of 50 µA.

7. The lithium iron phosphate particle according to any one of claims 1 to 6, wherein the lithium iron phosphate particle satisfies at least one of a) to f):
a) Dv10 of the lithium iron phosphate particle is ≥ 0.2 µm;
b) Dv50 of the lithium iron phosphate particle is 0.5-5 µm;
c) Dv90 of the lithium iron phosphate particle is ≤ 10 µm;
d) Dv99 of the lithium iron phosphate particle is ≤ 12 µm;
e) a powder compaction density of the lithium iron phosphate under a pressure of 3 tons is ≥ 2.25 g/cm³; and
f) a powder resistivity of the lithium iron phosphate is less than 60 Ω·cm.

8. A method for preparing a lithium iron phosphate particle, comprising: providing raw materials comprising at least a lithium source, an iron source, a phosphorus source, a carbon source, a carbon film-forming agent, and a modifying agent, and performing at least two sintering steps, wherein
a first sintering is performed at a temperature of 500°C to 760°C, and a carbon content of a material after the first sintering is 0.01 wt% to 0.79 wt%; and
a second sintering is performed at a temperature of 700°C to 800°C, and a carbon content of a material after the second sintering is 0.8 wt% to 2.0 wt%.

9. The method for preparing a lithium iron phosphate particle according to claim 8, wherein the lithium iron phosphate particle comprises at least one of Ti, V, Mg, and/or Nb, and calculated based on a total weight of the lithium iron phosphate particle, a content of the elements is 1000 ppm to 10000 ppm.

10. The method for preparing a lithium iron phosphate particle according to claim 8 or 9, wherein a first pulverization is performed after the first sintering, and a second pulverization is performed after the second sintering, wherein
a Dv50 of a product after the first pulverization is 300 nm to 1200 nm; and
a Dv50 of a product after the second pulverization is 500 nm to 5000 nm.

11. The method for preparing a lithium iron phosphate particle according to any one of claims 8 to 10, comprising: providing raw materials comprising at least a lithium source, an iron source, a phosphorus source, a carbon source, a carbon film-forming agent, and a modifying agent, wherein mixing ratios of the lithium source, the iron source, and the phosphorus source, in terms of atomic molar amounts of the elements, satisfy Fe:P = 0.96-0.985 and Li:Fe = (1.0-1.1):(0.95-1.1); and a weight ratio of the carbon source to the carbon film-forming agent satisfies carbon source:carbon film-forming agent = 9:1 to 2:8.

12. The method for preparing a lithium iron phosphate particle according to any one of claims 8 to 11, wherein the lithium source is a lithium compound, comprising one or more of lithium dihydrogen phosphate, lithium oxalate, lithium carbonate, lithium oxide, lithium hydroxide, and lithium acetate;
the iron source is an iron compound, comprising at least one of iron hydroxide, ferrous chloride, diiron trioxide, iron phosphate, iron pyrophosphate, ferrous oxalate, iron powder, iron nitrate, triiron tetroxide, and iron oxyhydroxide;
the phosphorus source is a phosphorus compound, comprising one or more of phosphoric acid, ammonium dihydrogen phosphate, and diammonium hydrogen phosphate;
the modifying agent comprises at least one of titanium dioxide, vanadium pentoxide, tetrabutyl titanate, niobium pentoxide, niobium oxalate, niobium ethoxide, magnesium hydroxide, magnesium nitrate, and ammonium metavanadate;
the carbon source comprises at least one of citric acid, glucose, sucrose, starch, fructose, and lactose; and
the carbon film-forming agent comprises one or a combination of two or more of polyethylene glycol, polyaniline, polyacrylonitrile, polyvinylpyrrolidone, and polyvinyl alcohol.

13. The method for preparing a lithium iron phosphate particle according to any one of claims 8 to 12, wherein a heating rate in each of the first sintering and the second sintering is independently 2°C/min to 20°C/min; a constant-temperature holding time of the first sintering is 1 h to 6 h; and a constant-temperature holding time of the second sintering is 2 h to 12 h.

14. The method for preparing a lithium iron phosphate particle according to claims 8 to 13, wherein in the second sintering, carbon coating is performed on the product after the first sintering, and based on a total weight of the product after the first sintering, an amount of the carbon coating is 0.01 wt% to 1.99 wt%.

15. The method for preparing a lithium iron phosphate particle according to claim 14, wherein the carbon coating is performed by vapor deposition during a sintering process, or by carbonizing a carbon source at a high temperature for carbon coating.

16. The method for preparing a lithium iron phosphate particle according to any one of claims 10 to 15, wherein the pulverization comprises one or more of grinding, sand milling, mechanical crushing, and jet milling.

17. A positive electrode plate, comprising, as a positive electrode material, the lithium iron phosphate particle according to any one of claims 1 to 7, or a lithium iron phosphate particle prepared by the method for preparing a lithium iron phosphate particle according to any one of claims 8 to 16.

18. A secondary battery, comprising the positive electrode plate according to claim 17.

19. An electrical device, comprising the secondary battery according to claim 18.
